# EUROPÄISCHE PATENTSCHRIFT

(11) **EP 3 988 881 B1**
(45) Veröffentlichungstag und Bekanntmachung des Hinweises auf die Patenterteilung: **05.07.2023**
(21) Anmeldenummer: 21202046.5
(22) Anmeldetag: 23.03.2020
(51) Int. Cl.: F28D 1/04, F28D 1/053, F28F 9/02, F28B 1/06, F28D 1/02, F28F 27/00

(54) **VERFAHREN ZUM BETRIEB EINER WÄRMEÜBERTRAGERANORDNUNG**
METHOD FOR OPERATING A HEAT TRANSFER ASSEMBLY
PROCÉDÉ DE FONCTIONNEMENT D'UN AGENCEMENT D'ÉCHANGEUR DE CHALEUR

(30) Priorität: 18.04.2019 DE 102019110236
(43) Veröffentlichungstag der Anmeldung: 27.04.2022
(62) Teilanmeldung aus: 20714971.7
(73) Patentinhaber: Güntner GmbH & Co. KG, 82256 Fürstenfeldbruck (DE)
(72) Erfinder: ERHARD, Alfred, 88147 Achberg (DE); BRENTROP, Hansjörg, 3653 Oberhofen am Thunersee (CH)
(74) Vertreter: Charrier Rapp & Liebau

(56) Entgegenhaltungen:
- EP-A1- 1 698 847
- EP-A1- 3 306 247
- WO-A1-90/15299
- WO-A1-2018/184908

## Beschreibung

Die Erfindung betrifft ein Verfahren zum Betrieb einer Wärmeübertrageranordnung mit wenigstens einem Mehrpass-Wärmeübertrager, welcher einen ersten und einen zweiten Verteiler mit jeweils einem Anschlussstutzen zum Anschluss an eine Fluidleitung sowie mindestens einen ersten Umlenkverteiler und eine Mehrzahl von Rohrleitungen umfasst, wobei die Rohrleitungen von einem Fluid, insbesondere Wasser, durchströmbar sind.

Derartige Wärmeübertrageranordnungen mit wenigstens einem Mehrpass-Wärmeübertrager können beispielsweise als Rückkühler in Kühlsystemen zur Kühlung eines in dem Kühlsystem als Wärmeträgermedium eingesetzten Fluids verwendet werden. Der Rückkühler wird dabei in der Regel außerhalb einer zu kühlenden Einrichtung, beispielsweise außerhalb eines Gebäudes, platziert. Wenn als Wärmeträgermedium Wasser eingesetzt wird, besteht deshalb die Gefahr, dass das Wärmeträgermedium bei Frost am Aufstellort des Rückkühlers einfriert.

Aus dem Stand der Technik sind daher Kühlsysteme mit Wärmeübertrageranordnungen bekannt, die in einem Frostschutzbetrieb eine Entleerung des Rückkühlers ermöglichen. So ist beispielsweise aus der WO2018/184908 A1, die ein Verfahren gemäß dem Oberbegriff des Anspruchs 1 offenbart, ein Kühlsystem mit im Kreislauf geführtem Wasser als Wärmeträgermedium bekannt, welches einen Rückkühler und einen Wasserbehälter enthält, wobei der Rückkühler an einem ersten Endbereich einen Eingangssammler und einen Ausgangssammler sowie an seinem dem ersten Endbereich gegenüberliegenden zweiten Endbereich einen Umlenksammler mit einem ersten und einem zweiten Ast, die V-förmig zueinander angeordnet sind, umfasst. Der erste Ast und der zweite Ast des Umlenksammlers sind dabei über einen an ihrem oberen Ende angeordneten Verbindungszweig miteinander verbunden, wobei in dem Verbindungszweig eine Lüftungsöffnung angeordnet ist. Zwischen dem Eingangssammler und dem ersten Ast des Umlenksammlers erstreckt sich eine in einer Durchströmungsrichtung ansteigende erste Rohranordnung und zwischen dem zweiten Ast des Umlenksammlers und dem Ausgangssammler erstreckt sich eine in der Durchströmungsrichtung abfallende zweite Rohranordnung. Der drucklos ausgebildete Wasserbehälter steht mit einem Eingang am Eingangssammler und mit einem Ausgang am Ausgangssammler in Verbindung, so dass das in dem Wasserbehälter bevorratete Kühlwasser in einem geschlossenen Kreislauf durch den Rückkühler geleitet werden kann. Zum Be- und Entlüften steht der Wasserbehälter über eine Be-/Entlüftungsleitung, die in die Lüftungsöffnung am Verbindungszweig des Umlenksammlers mündet, mit dem Rückkühler in Verbindung. Der so ausgebildete Rückkühler verfügt damit über zwei in Reihe geschaltete Einpass-Register mit einer ersten, als Hinleitung ausgebildete Rohranordnung, die den Eingangssammler mit dem Umlenksammler verbindet und ein erstes Einpass-Register bildet, und einer ein zweites Einpass-Register bildendeten zweiten Rohranordnung, welche zwischen dem Umlenksammler und dem Ausgangssammler verläuft, um den Umlenksammler mit dem Ausgangssammler zu verbinden. In einem Rückkühlbetrieb wird das durch die Rohranordnungen geleitete Wasser durch Wärmeaustausch mit angesaugter Umgebungsluft gekühlt. Hierfür wird das in dem Wasserbehälter bevorratete Kühlwasser mittels einer Umwälzpumpe durch den Rückkühler geleitet. Zur Entleerung des Rückkühlers bei Frostgefahr ist bei diesem bekannten Kühlsystem vorgesehen, die Umwälzpumpe abzuschalten. Bei einer Abschaltung der Umwälzpumpe entleert sich der Rückkühler in Folge der ständigen Be-/Entlüftung des Umlenksammlers in Verbindung mit dem Gefälle der beiden Rohranordnungen der beiden Einpass-Register selbsttätig.

Wärmeübertrageranordnungen mit einem oder mehreren in Reihe geschalteten Einpass-Registern (Einpass-Wärmeübertrager) weisen jedoch im Vergleich zu Mehrpass-Systemen, in denen das Kühlmedium den oder die Wärmeübertrager mehrfach durchläuft, eine geringere Kühleffizienz auf. Zur Verbesserung der Kühleffizienz und zur Erhörung der Kühlleistung werden daher häufig Wärmeübertrageranordnungen mit Mehrpass-Registern eingesetzt. Dies ist insbesondere erforderlich, wenn Kühlleistungen zwischen 100 und 1500 kW erzielt werden sollen.

Eine Kühlanordnung mit einem Zweipass-Register ist beispielsweise aus der WO 90/15299-A bekannt. Das darin als Wärmeträgermedium eingesetzte Kühlwasser durchfließt dabei einen Wärmetauscher der Kühlanlage zweimal (2-Pass-Wärmeübertrager). Hierfür ist ein Wärmeübertrager mit einem an einem Ende des Wärmeübertragers angeordneten Eingangssammler und einem Auslasssammler sowie einem am gegenüberliegenden Ende angeordneten Umlenksammler vorgesehen, wobei sich zwischen dem Eingangssammler und dem Umlenksammler als Hinleitungen ausgebildete Rohrleitungen erstrecken und sich zwischen dem Umlenksammler und dem Ausgangssammler als Rückleitungen ausgebildete Rohrleitungen erstrecken. In einem Rückkühlbetrieb wird das Kühlwasser zunächst in einem ersten Durchlauf (erster Pass) durch die Hinleitungen und in einem zweiten Durchlauf (zweiter Pass) durch die Rückleitungen geleitet. Während der Durchleitung des Kühlwassers durch die Rohrleitungen des Zweipass-Wärmeübertragers findet zur Kühlung des Kühlwassers ein Wärmeaustausch mit einem von einem Ventilator angesaugten und durch den Zwei-Pass-Wärmeübertrager geleiteten Luftstrom der Umgebungsluft statt.

Bei der Verwendung von Mehrpass-Wärmeübertragern in frostgefährdeten Bereichen besteht die Gefahr, dass der Mehrpass-Wärmeübertrager nicht schnell genug und nicht vollständig entleert werden kann, um ein Einfrieren des Wärmeträgermediums (insbesondere Kühlwasser) zu verhindern. Insbesondere bei einem sehr schnellen Temperaturabfall des sich im Mehrpass-Wärmeübertrager befindlichen Wärmeträgermediums infolge einer schnellen Erniedrigung der Umgebungstemperatur oder eines starken Windeinflusses auf den Wärmeübertrager muss auch bei Verwendung von Mehrpass-Wärmeübertragern gewährleistet sein, dass der Wärmeübertrager innerhalb kürzester Zeit vollständig entleert werden kann, um ein Einfrieren des Wärmeträgermediums zu verhindern. Eine schnelle Entleerung eines Mehrpass-Wärmeübertragers ist jedoch aufgrund der langen Rohrleitungen, die vom Wärmeträgermedium mehrfach durchflossen werden und der dadurch bedingten langen Transportwege des Wärmeträgermediums durch die Rohrleitungen des Mehrpass-Wärmeübertragers schwierig. Die Länge der Rohrleitungen (einer Hin- bzw. Rückleitung) kann dabei zwischen 3 bis 15 m liegen. Aus demselben Grund ist auch eine schnelle Wiederbefüllung eines Mehrpass-Wärmeübertragers bei einer Wiederaufnahme des Rückkühlbetriebs nach Wegfall der Frostgefahr schwierig.

Hiervon ausgehend liegt der Erfindung die Aufgabe zugrunde, ein Verfahren zum Betrieb einer Wärmeübertrageranordnung mit wenigstens einem Mehrpass-Wärmeübertrager, welcher einen ersten und einen zweiten Verteiler mit jeweils einem Anschlussstutzen zum Anschluss an eine Fluidleitung sowie mindestens einen ersten Umlenkverteiler und eine Mehrzahl von Rohrleitungen umfasst, aufzuzeigen, welches eine hohe Kühlleistung bei einer möglichst hohen Effizienz ermöglicht und bei Frostgefahr eine möglichst schnelle und vollständige Entleerung des Mehrpass-Wärmeübertragers sowie eine möglichst schnelle Wiederaufnahme eines Rückkühlbetriebs nach Beendigung der Frostgefahr ermöglicht.

Diese Aufgaben werden gemäß der Erfindung mit dem Verfahren zum Betrieb einer Wärmeübertrageranordnung mit den Merkmalen des Anspruchs 1 gelöst.

Das erfindungsgemäße Verfahren zum Betrieb einer Wärmeübertrageranordnung mit wenigstens einen Mehrpass-Wärmeübertrager, insbesondere einen Zwei- oder einen Vier-Pass-Wärmeübertrager, bei welcher der oder jeder Wärmeübertrager einen ersten und einen zweiten Verteiler mit jeweils einem Anschlussstutzen zum Anschluss an eine Fluidleitung, sowie mindestens einen ersten Umlenkverteiler und eine Mehrzahl von Rohrleitungen umfasst, welche von einem als Wärmeträgermedium eingesetzten Fluid, insbesondere von Wasser, durchströmbar sind, sieht vor, dass der erste Verteiler und der zweite Verteiler an einem Ende der Wärmeübertrageranordnung angeordnet sind und der Umlenkverteiler am gegenüberliegenden Ende angeordnet ist und die Rohrleitungen sich von dem einen Ende zum gegenüberliegenden Ende erstrecken, wobei der erste Anschlussstutzen an einem tiefsten Punkt oder zumindest in der Nähe des tiefsten Punkts des ersten Verteilers und der zweite Anschlussstutzen an einem tiefsten Punkt oder zumindest in der Nähe des tiefsten Punkts des zweiten Verteilers angeordnet ist und die Wärmeübertrageranordnung in Abhängigkeit von Umgebungsparametern, insbesondere der Außentemperatur, wechselweise in verschiedenen Betriebsmodi, umfassend eine Rückkühlbetrieb, einen Entleerungsbetrieb, einen Befüllungsbetrieb und einen stand-by-Betrieb, betrieben wird. Erfindungsgemäß fließt dabei in dem Entleerungsbetrieb das Fluid schwerkraftbedingt aus allen Rohrleitungen in den ersten Verteiler und den zweiten Verteiler und von dort jeweils über den ersten und den zweiten Anschlussstutzen in eine Fluidleitung, und in dem Befüllungsbetrieb strömt das Fluid entgegen der Schwerkraft aus dem ersten Verteiler und dem zweiten Verteiler in alle Rohrleitungen ein.

Wenn von einem höchsten Punkt eines Verteilers gesprochen wird, ist dabei der geodätisch höchste Punkt des jeweiligen Verteilers gemeint. Wenn von einem tiefsten Punkt gesprochen wird, ist jeweils der geodätisch tiefste Punkt der jeweiligen Einrichtung (Verteiler) gemeint, insbesondere der in Bezug auf die vertikale Richtung gesehen tiefste Punkt. Dabei ist jeweils auch ein Punkt mit umfasst, der zumindest in der Nähe des geodätisch höchsten bzw. des geodätisch tiefsten Punkts liegt.

Durch den erfindungsgemäßen Betrieb einer Wärmeübertrageranordnung mit wenigstens einem Mehrpass-Wärmeübertrager kann sowohl eine schnelle Entleerung als auch eine schnelle Befüllung des oder der Mehrpass-Wärmeübertrager mit dem als Wärmeträgermedium eingesetzten Fluid erfolgen, indem bei Frostgefahr in einem Entleerungsbetrieb das Fluid schwerkraftbedingt aufgrund einer Neigung der Rohrleitungen zur Horizontalen gleichzeitig aus allen Rohrleitungen in den ersten und den zweiten Verteiler sowie in den dritten Umlenkverteiler und von dort jeweils über einen an dem tiefsten Punkt des ersten und des zweiten Verteilers sowie des dritten Umlenkverteilers angeordneten Anschlussstutzen (erster bzw. zweiter Anschlusstutzen) in eine mit den Anschlussstutzen in Verbindung stehende Fluidleitung abfließen kann. In entsprechender Weise kann das Fluid in einem Befüllungsbetrieb sehr schnell entgegen der Schwerkraft aus dem ersten und dem zweiten Verteiler gleichzeitig in alle Rohrleitungen des Mehrpass-Wärmeübertragers eingeleitet werden. Dadurch verkürzt sich die Entleerungs- bzw. die Befüllungszeit beim Entleeren bzw. Befüllen des Wärmeübertragers erheblich, weil das Fluid nicht gemäß der Strömungspfade beim Rückkühlbetrieb der Wärmeübertrageranordnung in den oder die Mehrpass-Wärmeübertrager eingeleitet wird, sondern über den ersten und den zweiten Verteiler gleichzeitig in bzw. aus allen Rohrleitungen des Mehrpass-Wärmeübertragers strömen kann.

Ein schnelles Herausfließen des Fluids aus den Rohrleitungen des Mehrpass-Wärmeübertragers in dem Entleerungsbetrieb wird dabei durch eine Neigung der Rohrleitungen zur horizontalen Ebene unterstützt. Die zweckmäßig parallel zueinander verlaufenden Rohrleitungen schließen bevorzugt mit der Horizontalen einen Winkel zwischen 0,5° und 5° und besonders bevorzugt einen Winkel zwischen 2° und 4°, insbesondere 3° ein.

Bei dem Mehrpass-Wärmeübertrager kann es sich bspw. um einen 2-pass-Wärmeübertrager handeln, in dem das Fluid zweifach durch die Rohrleitungen des Wärmeübertragers strömt und dabei im Wärmeaustausch mit Kühlluft steht, die zweckmäßig von einem oder mehreren Ventilatoren aus der Umgebung angesaugt und durch den Wärmeübertrager geleitet wird.

Die Rohrleitungen jedes Mehrpass-Wärmeübertragers sind dabei in einer ersten und einer zweiten Gruppe von Rohrleitungen unterteilt, wobei die erste Gruppe von Rohrleitungen als Hinleitungen und die zweite Gruppe von Rohrleitungen als Rückleitungen dienen. Im Rückkühlbetrieb kann das Fluid beispielsweise über den als Eingangsverteiler ausgebildeten ersten Anschlussstutzen in den ersten Verteiler eingeleitet werden und das Fluid durchströmt die Hinleitungen (erste Gruppe von Rohrleitungen) des 2-pass-Wärmeübertragers in einem ersten Durchlauf zum ersten Umlenkverteiler und wird von dort in die Rückleitungen (zweite Gruppe von Rohrleitungen) umgelenkt, so dass das Fluid dann in einem zweiten Durchlauf in den Rückleitungen zum zweiten Verteiler (Ausgangsverteiler) zurückfließen kann. Das Fluid verlässt den Zweipass-Wärmeübertrager dabei über den am höchsten Punkt des zweiten Verteilers angeordneten dritten Anschlussstutzen. Dabei können die beiden Verteiler (erster Verteiler und zweiter Verteiler) auch miteinander vertauscht werden, d.h., es ist möglich, dass das Fluid zuerst in den als Eingangsverteiler ausgebildeten zweiten Verteiler einströmt und aus dem als Ausgangsverteiler ausgebildeten ersten Verteiler ausströmt.

Bei dem Mehrpass-Wärmeübertrager kann es sich auch um einen 4-pass-Wärmeübertrager handeln, in dem das Fluid vierfach durch die Rohrleitungen des Wärmeübertragers strömt und dabei im Wärmeaustausch mit der Kühlluft steht. Bei einem 4-pass-Wärmeübertrager ist neben dem ersten und dem zweiten Verteiler und dem ersten Umlenkverteiler noch ein zweiter und ein dritter Umlenkverteiler vorgesehen, wobei der erste und der zweite Verteiler sowie der dritte Umlenkverteiler an einem Ende der Wärmeübertrageranordnung und der erste und der zweite Umlenkverteiler am gegenüberliegenden Ende der Wärmeübertrageranordnung angeordnet sind und die Rohrleitungen sich von dem einen Ende zum gegenüberliegenden Ende erstrecken, um den ersten und den zweiten Verteiler mit einem der Umlenkverteiler zu verbinden. Dabei ist wiederum an einem tiefsten Punkt oder zumindest in der Nähe des tiefsten Punkts des ersten Verteilers und des zweiten Verteilers ein Anschlussstutzen angeordnet (erster und zweiter Anschlussstutzen) angeordnet und an dem zweiten Verteiler ist wiederum ein dritter Anschlussstutzen an einem höchsten Punkt oder zumindest in der Nähe des höchsten Punkts des zweiten Verteilers angeordnet. An dem dritten Umlenkverteiler ist dabei zweckmäßig an einem tiefsten Punkt oder zumindest in der Nähe des tiefsten Punkts des dritten Umlenkverteilers ein vierter Anschlussstutzen angeordnet.

Im Rückkühlbetrieb des 4-pass-Wärmeübertragers kann das Fluid beispielsweise über den als Eingangsverteiler ausgebildeten ersten Anschlussstutzen in den ersten Verteiler eingeleitet werden und das Fluid durchströmt die Hinleitungen (erste Gruppe von Rohrleitungen) des 4-pass-Wärmeübertragers in einem ersten Durchlauf zum ersten Umlenkverteiler und wird von dort in die Rückleitungen (zweite Gruppe von Rohrleitungen) umgelenkt, so dass das Fluid dann in einem zweiten Durchlauf in den Rückleitungen zum dritten Umlenkverteiler am ersten Ende der Wärmeübertrageranordnung zurückfliest und dort von dem dritten Umlenkverteiler wieder in Rohrleitungen der ersten Gruppe (Hinleitungen) umgelenkt wird und in einem dritten Durchlauf zum zweiten Umlenkverteiler fließt und dort wiederum in Rohrleitungen der zweiten Gruppe (Rückleitungen) umgelenkt wird, um schließlich in einem vierten Durchlauf zum zweiten Verteiler (Ausgangsverteiler) zurückzufließen. Das Fluid verlässt den Mehrpass-Wärmeübertrager dabei über den am höchsten Punkt des zweiten Verteilers angeordneten dritten Anschlussstutzen. Dabei können die beiden Verteiler (erster Verteiler und zweiter Verteiler) auch miteinander vertauscht werden, d.h., es ist möglich, dass das Fluid zuerst in den als Eingangsverteiler ausgebildeten zweiten Verteiler einströmt und aus dem als Ausgangsverteiler ausgebildeten ersten Verteiler ausströmt.

Um zu gewährleisten, dass der Mehrpass-Wärmeübertrager beim Befüllen und während des Rückkühlbetriebs jederzeit vollständig mit Fluid gefüllt ist (wodurch eine verbesserte Effizienz erzielt werden kann) ist es sowohl beim 2-pass- als auch beim 4-pass-Wärmeübertrager zu bevorzugen, dass das Fluid über den ersten Anschlussstutzen (am tiefsten Punkt des ersten Verteilers) in den Wärmeübertrager eintritt und den Wärmeübertrager an dem dritten Anschlussstutzen (am höchsten Punkt des zweiten Verteilers) verlässt. Bevorzugt ist der Verteiler (zweiter Verteiler), der an seinem höchsten Punkt den dritten Anschlussstutzen enthält, in der Wärmeübertrageranordnung außenseitig, d.h. zur Anströmfläche hin, angeordnet.

Zum Druckausgleich mit der Umgebung (also mit dem atmosphärischen Luftdruck) ist zumindest an einem der Umlenkverteiler, insbesondere am ersten und - beim 4-pass-Wärmeübertager - am zweiten Umlenkverteiler, eine Lüftungsöffnung angeordnet. Die Lüftungsöffnung ist zweckmäßig an einem höchsten Punkt oder in der Nähe des höchsten Punkts des jeweiligen Umlenkverteilers angeordnet. Dadurch kann eine vollständige Be- und Entlüftung der Umlenkverteiler gewährleistet werden.

Die Verteiler, also der erste und der zweite Verteiler sowie jeder Umlenkverteiler, können jeweils als rohrförmige Mehrfachverteiler ausgebildet sein. Die Rohre der Verteiler können dabei mit ihrer Längsachse vertikal stehend oder auch schräg zur Vertikalen geneigt angeordnet sein.

Eine hohe Wärmeaustauscheffizienz und eine kompakte Bauweise der Wärmeübertrageranordnung lässt sich erzielen, wenn die Wärmeübertrageranordnung zwei gegenüberliegend angeordnete Mehrpass-Wärmeübertrager enthält, wobei die beiden Mehrpass-Wärmeübertrager schräg zur Vertikalen geneigt und V-förmig zueinander stehend angeordnet sind. Entsprechend dieser schrägstehenden Anordnung der Wärmeübertrager verlaufen die rohrförmigen Verteiler (erster Verteiler und zweiter Verteiler sowie die Umlenkverteiler) ebenfalls schräg stehend zur Vertikalen.

Eine besonders kompakte Bauweise lässt sich erzielen, wenn der erste und der zweite Umlenkverteiler in einem gemeinsamen Sammelrohr mit einer darin angeordneten Trennwand enthalten sind, wobei die Trennwand das gemeinsame Sammelrohr in einen Zuströmbereich, der den ersten Verteiler bildet, und einen Abströmbereich, der den zweiten Verteiler bildet, unterteilt. In entsprechender Weise kann beim 4-pass-Wärmeübertrager auch der erste und der zweite Umlenkverteiler, die jeweils am anderen Ende der Wärmeübertrageranordnung benachbart zueinander angeordnet sind, in einem gemeinsamen Sammelrohr mit einer Trennwand angeordnet sein, wobei die Trennwand das Sammelrohr in wenigstens zwei Bereiche unterteilt, wobei ein erster Bereich den ersten Umlenkverteiler und ein zweiter Bereich den zweiten Umlenkverteiler bildet.

In entsprechender Weise können beim 4-pass-Wärmeübertrager auch der erste Verteiler, der zweite Verteiler sowie der dritte Umlenkverteiler, die jeweils an einem Ende der Wärmeübertrageranordnung benachbart zueinander angeordnet sind, in einem gemeinsamen Sammelrohr angeordnet sein, wobei das Sammelrohr wiederum ein Trennelement enthält, welches das Sammelrohr zumindest in einen Zuströmbereich (der den ersten Verteiler ausbildet), einen Abströmbereich (der dem zweiten Verteiler ausbildet) und einen Umlenkbereich (der den dritten Umlenkverteiler ausbildet) unterteilt. Dabei sind in dem gemeinsamen Sammelrohr der erste, der zweite, der dritte und der vierte Anschlussstutzen angeordnet, wobei der erste Anschlussstutzen im Zuströmbereich an einem tiefsten Punkt des gemeinsamen Sammelrohrs, der zweite Anschlussstutzen im Abströmbereich an einem höchsten Punkt des gemeinsamen Sammelrohrs, der dritte Anschlussstutzen im Abströmbereich an einem tiefsten Punkt des gemeinsamen Sammelrohrs und der vierte Anschlussstutzen an einem tiefsten Punkt des Umlenkbereichs angeordnet ist.

Um den ersten und den zweiten Anschlussstutzen sowie ggf. den beim 4-pass-Wärmeübertrager vorhandenen vierten Anschlussstutzen, die jeweils an einem tiefsten Punkt des betreffenden Verteilers (erster Verteiler und zweiter Verteiler, ggf. dritter Umlenkverteiler) angeordnet sind, je nach Betriebsmodus der Wärmeübertrageranordnung öffnen oder schließen zu können, ist bevorzugt jedem dieser Anschlussstutzen ein steuerbares Ventil zugeordnet. Das steuerbare Ventil kann dabei insbesondere in dem jeweiligen Anschlussstutzen (erster, zweiter oder vierter Anschlussstutzen) angeordnet sein. Die Ansteuerung der steuerbaren Ventile kann beispielsweise hydraulisch, pneumatisch oder elektrisch erfolgen.

In einer zweckmäßigen Ausführungsform der Wärmeübertrageranordnung sind der erste und der zweite Verteiler sowie der dritte Umlenkverteiler an einem vorderen stirnseitigen Ende der Wärmeübertrageranordnung angeordnet und der erste und der zweite Umlenkverteiler sind an der gegenüberliegenden, hinteren Stirnseite der Wärmeübertrageranordnung angeordnet. Beim 4-pass-Wärmeübertrager ist an der vorderen Stirnseite benachbart zum ersten un zweiten Verteiler der dritte Umlenkverteiler und an der hinteren Stirnseite benachbart zum ersten Umlenkverteiler der zweite Umlenkverteiler angeordnet. Dadurch kann eine kompakte Bauweise und eine den Erfordernissen in Bezug auf die Kühlleistung entsprechende Dimensionierung der Wärmeübertrageranordnung gewährleistet werden.

Die Wärmeübertrageranordnung kann sowohl in der 2-pass- als auch in der 4-pass-Version in verschiedenen Betriebsmodi, insbesondere in einem Rückkühlbetrieb, einem Entleerungsbetrieb bei Frostgefahr, einem Befüllungsbetrieb zur erstmaligen Befüllung der Wärmeübertrageranordnung oder für eine Wiederbefüllung nach Beendigung der Frostgefahr sowie in einem Stand-by-Betrieb nach einer erfolgten Entleerung der Wärmeübertrageranordnung bei Frostgefahr bzw. bei anhaltendem Frost betrieben werden. Zur Umschaltung der Wärmeübertrageranordnung von einem Betriebsmodus in einen anderen Betriebsmodus ist eine Steuereinrichtung zur Steuerung der Wärmeübertrageranordnung vorgesehen. Die Steuerung der Wärmeübertrageranordnung und insbesondere die Einstellung eines geeigneten Betriebsmodus erfolgt in Abhängigkeit von Umgebungsparametern, wie z.B. der Außentemperatur und der Windgeschwindigkeit am Aufstellort der Wärmeübertrageranordnung. Zur Erfassung der Umgebungsparameter sind zweckmäßig Sensoren, insbesondere ein Thermometer zur Erfassung der Außentemperatur und ein Windmesser zur Erfassung der Windgeschwindigkeit, vorgesehen und mit der Steuereinrichtung gekoppelt. Die von den Sensoren erfassten Messwerte der Umgebungsparameter werden der Steuereinrichtung zugeführt. Neben den Umgebungsparametern wie Außentemperatur und Windgeschwindigkeit wird zweckmäßig über weitere Sensoren, insbesondere Thermometer, die Eingangstemperatur des Fluids beim Eintritt in die Wärmeübertrageranordnung erfasst. Weiterhin kann über Druck- oder Durchflusssensoren der Volumenstrom des in die Wärmeübertrageranordnung einströmenden bzw. des aus der Wärmeübertrageranordnung ausströmenden Fluidstroms gemessen und der Steuereinrichtung zugeleitet werden. Die Steuereinrichtung berechnet auf Basis der zugeleiteten Messwerte, insbesondere unter Berücksichtigung der Außentemperatur und der Eingangstemperatur des Fluids, eine prognostizierte Austrittstemperatur des Fluids beim Austritt aus der Wärmeübertrageranordnung. Wenn die berechnete Austrittstemperatur größer oder gleich einem vorgegebenen Grenzwert ist, schaltet die Steuereinrichtung den Betrieb der Wärmeübertrageranordnung vom Rückkühlbetrieb in den Entleerungsbetrieb um. Aus der rechnerisch ermittelten Austrittstemperatur des Fluids beim Austritt aus der Wärmeübertrageranordnung kann bei niedrigen Außentemperaturen unterhalb des Gefrierpunkts des Fluids (bei dem es sich bevorzugt um Wasser handelt) eine Einfriergefahr des Fluids erfasst werden. Um in einer solchen Situation ein Einfrieren des Fluids in den Rohrleitungen bzw. den Verteilern der Wärmeübertrageranordnung zu verhindern, schaltet die Steuereinrichtung möglichst schnell in den Entleerungsbetrieb um, in dem das sich in den Rohrleitungen befindliche Fluid gleichzeitig aus allen Rohrleitungen in den ersten und den zweiten Verteiler sowie den ggf. (beim 4-pass-Wärmeübertrager) vorhandenen dritten Umlenkverteiler und von dort durch die jeweils am tiefsten Punkt dieser Verteiler angeordneten Anschlussstutzen (erster, zweiter und vierter Anschlussstutzen) in eine mit diesen Anschlussstutzen in Verbindung stehende Fluidleitung aus dem frostgefährdeten Bereich abfließen kann.

Diese und weitere Merkmale sowie Vorteile der Erfindung ergeben sich aus dem nachfolgend unter Bezugnahme auf die begleitenden Zeichnungen näher beschriebenen Ausführungsbeispiel. Die Zeichnungen zeigen:
- **Fig.1:**: Darstellung eines ersten Ausführungsbeispiels einer Wärmeübertrageranordnung mit zwei V-förmig zueinander angeordneten 4-pass-Wärmeübertragem in einer Ansicht auf eine vordere Stirnseite der Wärmeübertrageranordnung;
- **Fig. 2:**: Seitenansicht der 4-pass-Wärmeübertrageranordnung von Figur 1;
- **Fig. 3:**: Schematische Darstellung verschiedener Betriebsmodi der Wärmeübertrageranordnung der Figuren 1 und 2, wobei in Figur 3a ein Rückkühlbetrieb, in Figur 3b ein Befüllungsbetrieb und in Figur 3c ein Entleerungsbetrieb eines Mehrpass-Wärmeübertragers der Wärmeübertrageranordnung dargestellt ist;
- **Fig.4:**: Darstellung eines zweiten Ausführungsbeispiels einer Wärmeübertrageranordnung mit zwei V-förmig zueinander angeordneten 2-pass-Wärmeübertragem in einer Ansicht auf eine vordere Stirnseite der Wärmeübertrageranordnung;
- **Fig. 5:**: Ansicht auf die hintere Stirnseite der 2-pass-Wärmeübertrageranordnung von Figur 4;
- **Fig. 6:**: Übersichts-Darstellung des zweiten Ausführungsbeispiels einer Wärmeübertrageranordnung mit zwei V-förmig zueinander angeordneten 2-pass-Wärmeübertragem in einer Ansicht auf die vordere Stirnseite der Wärmeübertrageranordnung (Figur 6a), auf die hintere Stirnseite der 2-pass-Wärmeübertrageranordnung (Figur 6b) und in einer Seitenansicht (Figur 6c);
- **Fig. 7:**: Schematische Darstellung verschiedener Betriebsmodi der 2-pass-Wärmeübertrageranordnung von Figur 6, wobei in Figur 7a ein Rückkühlbetrieb, in Figur 7b ein Befüllungsbetrieb und in Figur 7c ein Entleerungsbetrieb des 2-pass-Wärmeübertragers dargestellt ist;
- **Fig. 8:**: Darstellungen der verschiedenen Betriebsmodi der 2-pass-Wärmeübertrageranordnung aus Figur 7 anhand von Schnittzeichnungen des 2-pass-Wärmeübertragers durch eine horizontale Ebene, wobei in Figur 7a der Rückkühlbetrieb, in Figur 7b der Befüllungsbetrieb und in Figur 7c der Entleerungsbetrieb des 2-pass-Wärmeübertragers dargestellt ist;
- **Fig. 9:**: Schematische Darstellung eines Kühlsystems, welches eine Wärmeübertrageranordnung mit zwei gegenüberliegenden 2-pass-Wärmeübertragern enthält, wobei in Figur 9a das gesamte Kühlsystem und die darin eingesetzte Wärmeübertrageranordnung sowohl in einer Ansicht auf die vordere Stirnseite und in einer Seitenansicht gezeigt ist und Figur 9b einen Detailausschnitt aus Figur 9a im Bereich der Wärmeübertrageranordnung zeigt;
- **Fig. 10:**: Schematische Darstellung verschiedener Betriebsmodi der Wärmeübertrageranordnung des Kühlsystems von Figur 9, wobei Figur 10a die Wärmeübertrageranordnung im Rückkühlbetrieb, Figur 10b die Wärmeübertrageranordnung im Entleerungsbetrieb und Figur 10c die Wärmeübertrageranordnung im Befüllungsbetrieb zeigt;
- **Fig. 11:**: Schematische Darstellung eines weiteren Ausführungsbeispiels eines Kühlsystems mit einer Kombination von zwei Wärmeübertrageranordnungen gemäß der Erfindung;
- **Fig. 12:**: Schematische Darstellung möglicher Betriebsmodi der Kombination von Wärmeübertrageranordnungen aus Figur 11.

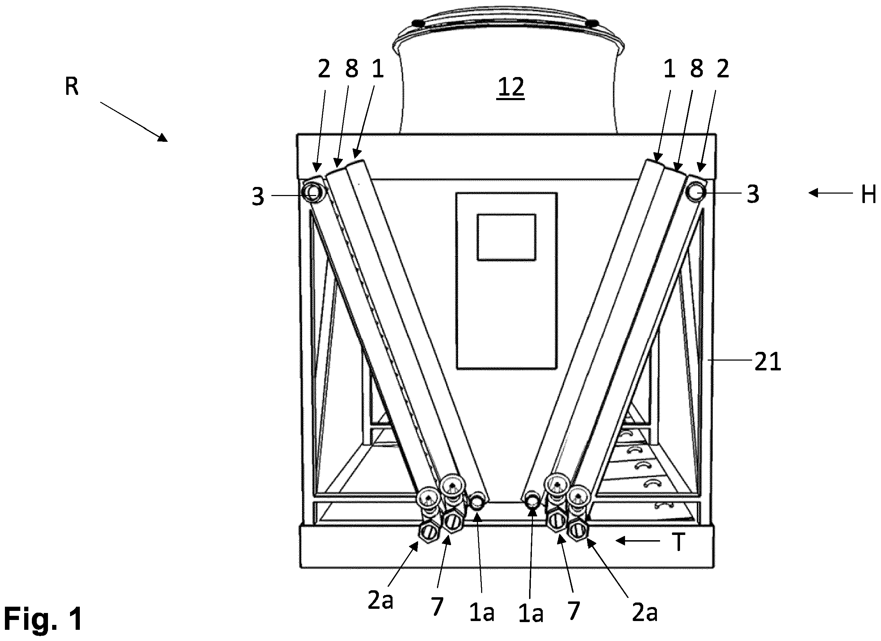

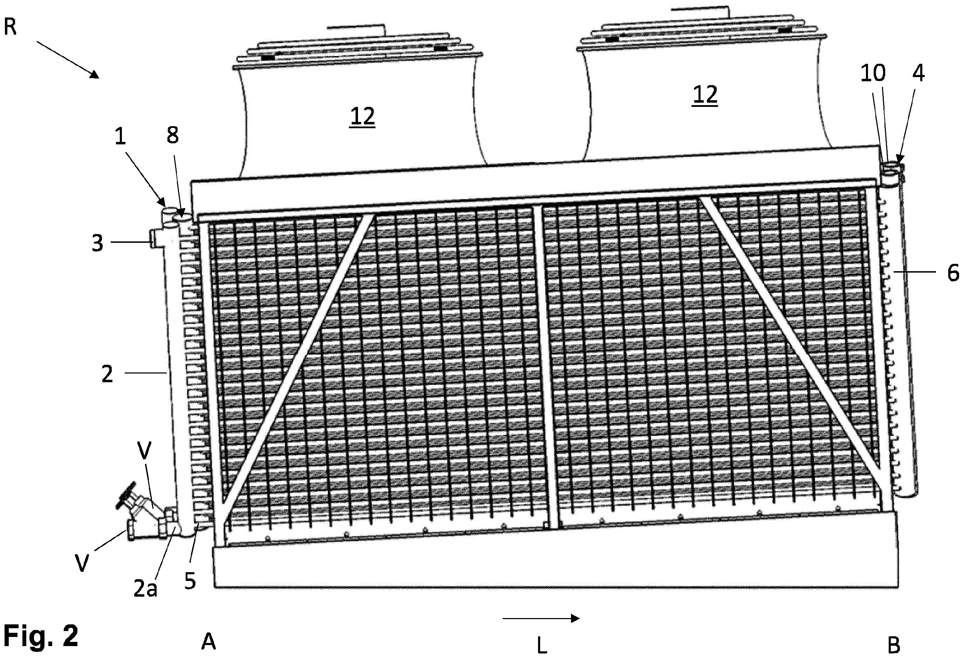

In den Figuren 1 und 2 ist ein Ausführungsbeispiel einer Wärmeübertrageranordnung gezeigt, die als Rückkühler R zur Kühlung eines als Wärmeträgermedium eingesetzten Fluids in einem Kühlsystem eingesetzt werden kann. Als Wärmeträgermedium kann dabei insbesondere Wasser verwendet werden. Wenn im Folgenden von Wasser gesprochen wird, ist dabei das als Wärmeträgermedium eingesetzte Fluid gemeint, wobei anstelle von Wasser auch ein anderes Fluid als Wärmeträgermedium verwendet werden kann.

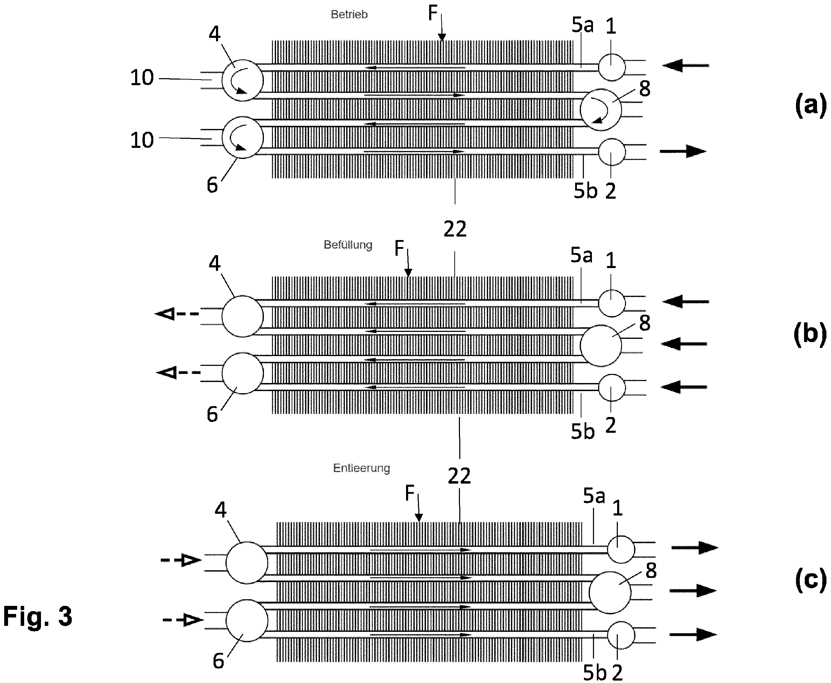

Die in den Figuren 1 und 2 dargestellte Wärmeübertrageranordnung enthält zwei Vier-Pass-Wärmeübertrager, die einander gegenüberliegende, schräg zur Vertikalen verlaufende, flächige Wärmeübertrager enthält. Die beiden Wärmeübertrager sind dabei, wie aus der Ansicht von Figur 1 ersichtlich, V-förmig zueinander angeordnet. Im Folgenden wir der Aufbau des auf der rechten Seite von Figur 1 angeordneten Wärmeübertragers erläutert. Der gegenüberliegende, auf der linken Seite der Wärmeübertrageranordnung angeordnete Wärmeübertrager ist entsprechend aufgebaut. Die beiden Wärmeübertrager sind dabei an einem Gehäuse 21 der Wärmeübertrageranordnung befestigt. Jeder Wärmeübertrager umfasst einen ersten Verteiler 1, der als Eingangsverteiler ausgebildet ist, einen zweiten Verteiler 2, der als Ausgangsverteiler ausgebildet ist, sowie einen ersten Umlenkverteiler 4, einen zweiten Umlenkverteiler 6 und einen dritten Umlenkverteiler 8, und eine Mehrzahl von Rohrleitungen 5. Der erste Verteiler 1, der zweite Verteiler 2 und der dritte Umlenkverteiler 8 sind dabei an dem vorderen stirnseitigen Ende Ader Wärmeübertrageranordnung angeordnet. Der erste und der zweite Umlenkverteiler 4, 6 sind jeweils am gegenüberliegenden Ende B der Wärmeübertrageranordnung, also an der hinteren Stirnseite, angeordnet. Die Rohrleitungen 5 erstrecken sich in einer Längsrichtung L der Wärmeübertrageranordnung von dem einen Ende A zu dem gegenüberliegenden Ende B. Die Rohrleitungen 5 sind dabei in eine erste Gruppe von Rohrleitungen 5a und eine zweite Gruppe von Rohrleitungen 5b unterteilt, wobei die erste Gruppe von Rohrleitungen 5a als Hinleitungen und die zweite Gruppe von Rohrleitungen 5b als Rückleitungen dienen. Ein Teil der Rohrleitungen 5 der ersten Gruppe von Rohrleitungen 5a (Hinleitungen) verbinden den ersten Verteiler 1 (Eingangsverteiler) mit dem ersten Umlenkverteiler 4 und ein Teil der Rohrleitungen 5 der zweiten Gruppe von Rohrleitungen 5b (Rückleitungen) verbinden den ersten Umlenkverteiler 4 mit dem dritten Umlenkverteiler 8. Ein Teil der Rohrleitungen der ersten Gruppe von Rohrleitungen 5a (Hinleitungen) verbindet wiederum den dritten Umlenkverteiler 8 mit dem zweiten Umlenkverteiler 6 und ein Teil der Rohrleitungen der zweiten Gruppe von Rohrleitungen 5b (Rückleitungen) verbindet wiederum den zweiten Umlenkverteiler 6 mit dem zweiten Verteiler 2 (Ausgangsverteiler), wie aus Figur 3 ersichtlich. Die Rohrleitungen 5 der Hin- und der Rückleitungen verlaufen dabei zumindest im Wesentlichen parallel zueinander und sind zur Horizontalen leicht geneigt, wie aus Figur 2 ersichtlich. Der Neigungswinkel der Rohrleitungen 5 zur Horizontalen liegt bevorzugt zwischen 0,5° und 5°, besonders bevorzugt zwischen 2° und 4° und in einem bevorzugten Ausführungsbeispiel beträgt der Winkel zwischen den Rohrleitungen und der horizontalen Ebene 3°.

An dem ersten Verteiler 1 (Eingangsverteiler) ist an einem tiefsten Punkt T dieses Verteilers 1 ein erster Anschlussstutzen 1a angeordnet. An entsprechender Stelle, d.h., an einem tiefsten Punkt T, ist auch an dem zweiten Verteiler 2 (Ausgangsverteiler) ein zweiter Anschlussstutzen 2a angeordnet. An dem zweiten Verteiler 2 (Ausgangsverteiler) ist an einem höchsten Punkt H ein weiterer Anschlussstutzen angeordnet, der als dritter Anschlussstutzen 3 bezeichnet wird. Am tiefsten Punkt T des dritten Umlenkverteilers 8 ist ebenfalls ein Anschlussstutzen 7 angeordnet, der als vierter Anschlussstutzen bezeichnet wird.

Die am gegenüberliegenden Ende B der Wärmeübertrageranordnung angeordneten Umlenkverteiler (erster und zweiter Umlenkverteiler 4, 6) weisen jeweils an einem höchsten Punkt H eine Lüftungsöffnung 10 auf, wie aus Figur 2 ersichtlich. Die Lüftungsöffnung 10 ist dabei zweckmäßig am oberen Ende der als rohrförmiger Mehrfachverteiler ausgebildeten Umlenkverteiler 4, 6 angeordnet. Das gegenüberliegende untere Ende der rohrförmigen Umlenkverteiler 4, 6 ist geschlossen. In jeder Lüftungsöffnung 10 ist zweckmäßig ein Ventil 11 angeordnet, mit dem die Lüftungsöffnung 10 geöffnet oder geschlossen werden kann. Auf die Verwendung eines Ventils in den Lüftungsöffnungen 10 kann jedoch auch verzichtet werden.

Zumindest in dem zweiten Anschlussstutzen 2a, der am unteren Ende des zweiten Verteilers 2 (Ausgangsverteiler) angeordnet ist, und in dem vierten Anschlussstutzen 7, der am unteren Ende des dritten Umlenkverteilers 8 angeordnet ist, ist ein steuerbares Ventil V zum Öffnen und Schließen des jeweiligen Anschlussstutzens 3, 7 eingesetzt (Figur 2). Das jeweilige Ventil V kann alternativ auch an einer anderen Stelle platziert sein, bspw. in einer mit dem jeweiligen Anschlussstutzen 3, 7 in Verbindung stehenden Fluidleitung. Die Ventile V können dabei unabhängig voneinander angesteuert werden, um die (unteren) Anschlussstutzen 3 und 7 unabhängig voneinander zu öffnen oder zu verschließen

In Figur 3 sind verschiedene Betriebsmodi der Wärmeübertrageranordnung schematisch dargestellt. In dem in Figur 3a gezeigten Rückkühlbetrieb wird bspw. Wasser als Wärmeträgermedium durch die Rohrleitungen 5 (Hinleitungen 5a und Rückleitungen 5b) der Wärmeübertrageranordnung geleitet. Gleichzeitig wird von wenigstens einem Ventilator 12, der an der Oberseite der Wärmeübertrageranordnung angeordnet ist, wie aus den Figuren 1 und 2 ersichtlich, (kalte) Umgebungsluft aus der Umgebung angesaugt und durch die Wärmeübertrager der Wärmeübertrageranordnung geleitet, um einen Wärmeaustausch zwischen dem durch die Rohrleitungen 5 geleiteten Wärmeträgermedium (Wasser) und der angesaugten Luft vorzunehmen. Zur Erhöhung der Wärmeübertragungseffizienz sind an den Rohrleitungen 5 Lamellen 22 befestigt (Figur 3), um die effektive Wärmeübertragungsfläche zu erhöhen. In dem gezeigten Ausführungsbeispiel handelt es sich bei den Wärmeübertragern dementsprechend um Lamellen- bzw. Rippenrohr-Wärmeübertrager. Anstelle herkömmlicher Lamellen- bzw. Rippenrohr-Wärmeübertrager können auch Mikrokanal-Wärmeübertrager in der Wärmeübertrageranordnung eingesetzt werden.

In dem in Figur 3a schematisch dargestellten Rückkühlbetrieb wird das als Wärmeträgermedium eingesetzten Fluid über den ersten Anschlussstutzen 1a in den ersten Verteiler 1 (Eingangsverteiler) eingeleitet und von dort durch einen Teil der Rohrleitungen 5 der ersten Gruppe von Rohrleitungen 5a (Hinleitungen) zum ersten Umlenkverteiler 4 geleitet und darin in einen Teil der Rohrleitungen der zweiten Gruppe von Rohrleitungen 5a (Rückleitungen) umgelenkt. Das Fluid strömt durch die Rückleitungen bis zu dem dritten Umlenkverteiler 8 und wird dort wieder in einen Teil der Rohrleitungen 5 der ersten Gruppe von Rohrleitungen 5a (Hinleitungen) umgelenkt. Das Fluid strömt in den Hinleitungen bis zum zweiten Umlenkverteiler 6 und wird darin wiederum in einen Teil der Rohrleitungen der zweiten Gruppe von Rohrleitungen 5a (Rückleitungen) umgelenkt und strömt schließlich in den zweiten Verteiler 2 (Ausgangsverteiler). Das Fluid wird von dem Ausgangsverteiler 2 durch den am oberen Ende des Ausgangsverteilers 2 angeordneten dritten Anschlussstutzen 3 entnommen und über eine an den dritten Anschlussstutzen 3 angeschlossene Fluidleitung 9 als Kühlmedium in ein Kühlmediumreservoir (Behälter B) oder direkt zu einem zu kühlenden Verbraucher geführt.

In dem Rückkühlbetrieb gemäß Figur 3a sind die Anschlussstutzen 2a und 7 (zweiter und vierter Anschlussstutzen) jeweils durch das darin angeordnete Ventil V verschlossen.

In Figur 3b ist die Wärmeübertrageranordnung schematisch in einem Befüllungsbetrieb gezeigt, in dem die Wärmeübertrager entweder erstmalig befüllt oder nach einer Entleerung mit dem Fluid wieder befüllt werden kann. In dem Befüllungsbetrieb sind die unteren Anschlussstutzen 2a und 7 (zweiter und vierter Anschlussstutzen), die jeweils am unteren Ende des zweiten Verteilers 2 und des dritten Umlenkverteilers 8 angeordnet sind, geöffnet. Dadurch kann das Fluid gleichzeitig über die jeweils am unteren Ende der beiden Verteiler 1, 2 und des dritten Umlenkverteilers 8 angeordneten Anschlussstutzen 1a, 2a und 7 in den ersten und den zweiten Verteiler 1, 2 sowie den dritten Umlenkverteiler 8 eingefüllt werden. Das Fluid strömt anschließend, wie in Figur 3b dargestellt, gleichzeitig durch alle Rohrleitungen 5 (also sowohl durch die Hinleitungen 5a als auch durch die Rückleitungen 5b) in derselben Strömungsrichtung von dem einen Ende A der Wärmeübertrageranordnung zu dem gegenüberliegenden Ende B. Aufgrund der Neigung der Rohrleitungen 5 zu dem vorderen Ende A hin strömt das Fluid in den Rohrleitungen 5 dabei entgegen der Schwerkraft nach oben in Richtung der am hinteren stirnseitigen Ende B angeordneten Umlenkverteiler 4, 6. Dabei wird die sich in dem ersten und dem zweiten Umlenkverteiler 4, 6 befindliche Luft durch die Lüftungsöffnungen 10 am oberen Ende dieser beiden Umlenkverteiler 4, 6 herausgedrückt, wodurch die beiden Umlenkverteiler 4, 6 entlüftet werden. Um zu verhindern, dass bei vollständiger Befüllung der Wärmeübertrager mit dem eingefüllten Fluid das Fluid aus den Lüftungsöffnungen 10 austreten kann, ist in den Lüftungsöffnungen 10 zweckmäßig ein sich selbsttätig verschließendes Ventil 11 angeordnet. Das Ventil 11 verschließt dabei die Lüftungsöffnung 10 selbsttätig, sobald durch das eintretende Fluid ein Innendruck im Ventil entsteht.

Um zu ermitteln, wann die Wärmeübertrageranordnung vollständig mit Fluid befüllt ist, wird mittels eines Drucksensors (P) der hydrostatische Druck des Fluids in der Wärmeübertrageranordnung erfasst. Sobald der vom Drucksensor (P) erfasste hydrostatische Druck einen vorgegebenen Druckgrenzwert übersteigt, wird die Wärmeübertrageranordnung vom Befüllungsbetrieb auf den Rückkühlbetrieb umgestellt. Alternativ dazu kann auch durch die Steuereinrichtung S der Wärmeübertrageranordnung aus deren Parametern eine voraussichtliche Befüllzeit berechnet und der Befüllungsbetrieb beendet werden, sobald die berechnete Befüllzeit unter Befüllung der Wärmeübertrageranordnung mit dem Fluid abgelaufen ist.

Entsprechend der Befüllung der Wärmeübertrageranordnung mit dem Fluid kann umgekehrt durch Öffnen der Ventile V in bzw. am zweiten Anschlussstutzen 2a und am vierten Anschlussstutzen 7 auch eine schnelle Entleerung der Wärmeübertrageranordnung erfolgen. In Figur 3c ist ein Entleerungsbetrieb der Wärmeübertrageranordnung gezeigt, in dem bei geöffneten Ventilen V im zweiten Anschlussstutzen 2a und im vierten Anschlussstutzen 7 das Fluid gleichzeitig aus allen Rohrleitungen 5 (also sowohl aus den Hinleitungen 5a als auch aus den Rückleitungen 5b) schwerkraftbedingt und in derselben Strömungsrichtung entlang des Gefälles der Rohrleitungen 5 vom hinteren Ende B zum vorderen Ende A hin in den ersten und den zweiten Verteiler 1, 2 sowie in den dritten Umlenkverteiler 8 fließen kann. Der Fluss des Fluids wird dabei einerseits durch die Neigung der Rohrleitungen 5 zu dem vorderen Ende A hin und andererseits durch eine Belüftung des ersten und des zweiten Umlenkverteilers 4, 6 über die Lüftungsöffnungen 10 gefördert. Zur Belüftung des ersten und des zweiten Umlenkverteilers 4, 6 wird das Ventil 11 in den Lüftungsöffnungen 10 geöffnet, so dass Umgebungsluft durch die Lüftungsöffnungen 10 in die Umlenkverteiler 4, 6 einströmen kann. Das Fluid kann schließlich durch die unteren Anschlussstutzen 1a, 2a und 7 (erster, zweiter und vierter Anschlussstutzen) in eine hier nicht dargestellte Fluidleitung abfließen, welche mit diesen Anschlussstutzen 1a, 2a und 7 in Verbindung steht.

Durch diese Ausbildung der Wärmeübertrager kann in dem erfindungsgemäßen Verfahren sowohl eine schnelle Befüllung mit dem Fluid als auch (bei Frostgefahr) eine schnelle Entleerung der Wärmeübertrageranordnung erfolgen, weil das Fluid sowohl bei der Befüllung als auch bei der Entleerung gleichzeitig und jeweils in derselben Strömungsrichtung durch alle Rohrleitung 5 der Wärmeübertrageranordnung ein- bzw. ausströmen kann.

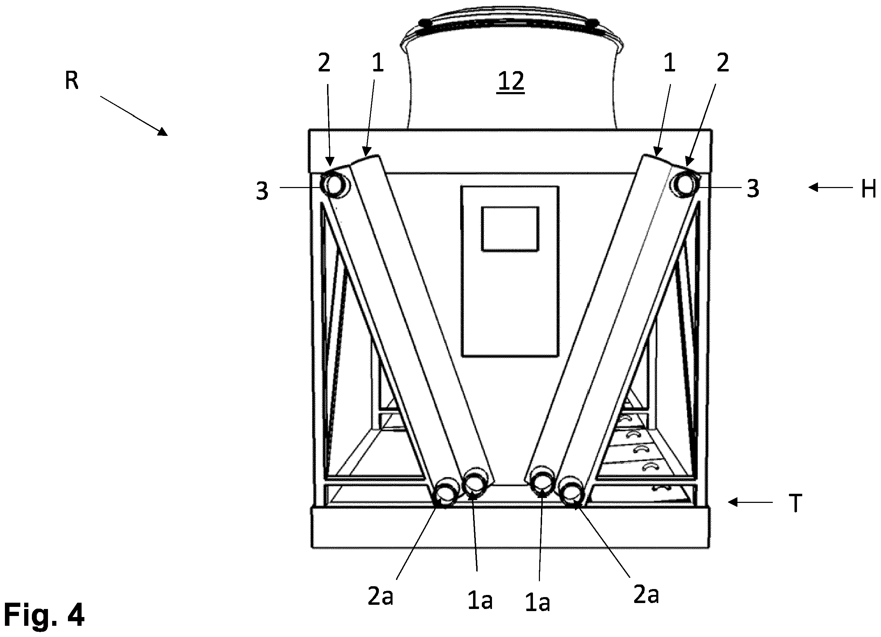

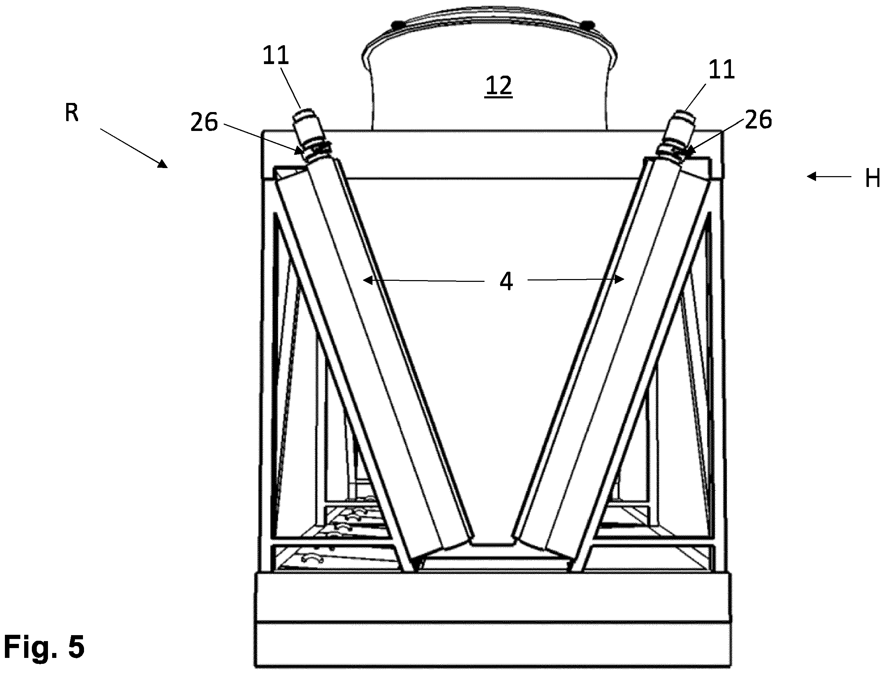

In den Figuren 4 und 5 ist ein weiteres Ausführungsbeispiel einer Wärmeübertrageranordnung gezeigt, wobei die dargestellte Wärmeübertrageranordnung zwei 2-Pass-Wärmeübertrager enthält, die V-förmig einander gegenüberliegend angeordnet und schräg zur Vertikalen geneigt sind. Die Schrägstellung der Wärmeübertrager in Bezug auf die vertikale Ebene liegt dabei zweckmäßig in einem Winkelbereich von 15° bis 70° und bevorzugt von 30° bis 45°.

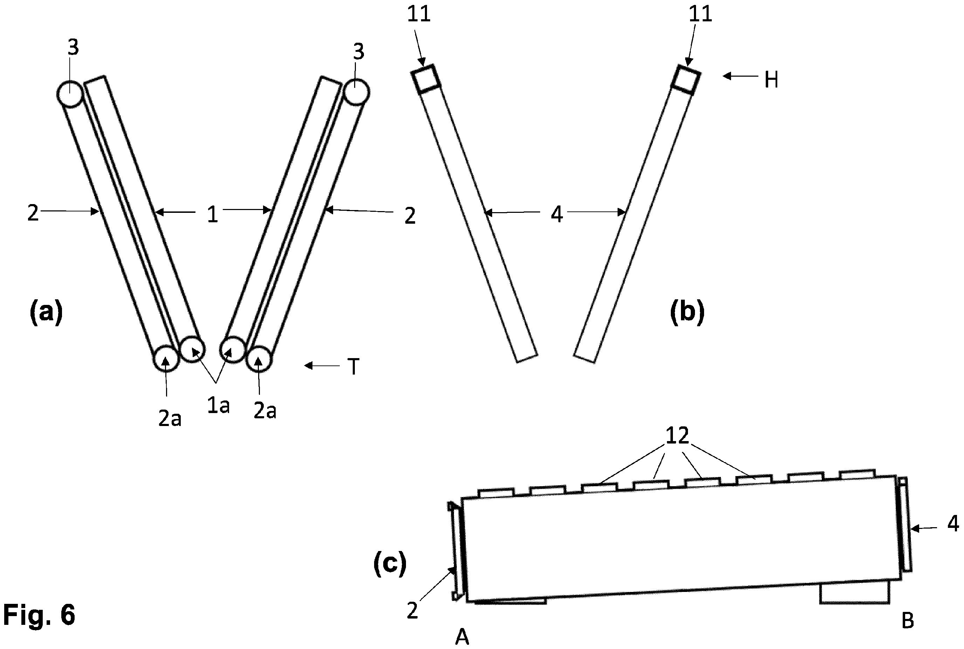

Im Folgenden wir der Aufbau des auf der rechten Seite von Figur 4 angeordneten Wärmeübertragers erläutert. Der gegenüberliegende, auf der linken Seite der Wärmeübertrageranordnung angeordnete Wärmeübertrager ist entsprechend aufgebaut. Die beiden 2-pass-Wärmeübertrager umfassen jeweils einen ersten Verteiler 1, der als Eingangsverteiler ausgebildet ist, einen zweiten Verteiler 2, der als Ausgangsverteiler ausgebildet ist, sowie einen (einzigen) ersten Umlenkverteiler 4, und eine Mehrzahl von Rohrleitungen 5. Der erste Verteiler 1 und der zweite Verteiler 2 sind dabei an dem vorderen stirnseitigen Ende Ader Wärmeübertrageranordnung angeordnet. Der Umlenkverteiler 4 ist am gegenüberliegenden Ende B der Wärmeübertrageranordnung, also an der hinteren Stirnseite, angeordnet. Die Rohrleitungen 5 erstrecken sich in einer Längsrichtung L der Wärmeübertrageranordnung von dem einen Ende A zu dem gegenüberliegenden Ende B. Die Rohrleitungen 5 sind dabei in eine erste Gruppe von Rohrleitungen 5a und eine zweite Gruppe von Rohrleitungen 5b unterteilt, wobei die erste Gruppe von Rohrleitungen 5a als Hinleitungen und die zweite Gruppe von Rohrleitungen 5b als Rückleitungen dienen. Die Rohrleitungen 5 der ersten Gruppe von Rohrleitungen 5a (Hinleitungen) verbinden den ersten Verteiler 1 (Eingangsverteiler) mit dem Umlenkverteiler 4 die Rohrleitungen 5 der zweiten Gruppe von Rohrleitungen 5b (Rückleitungen) verbinden den Umlenkverteiler 4 mit dem zweiten Verteiler 2 (Ausgangsverteiler), wie aus Figur 4 ersichtlich. Die Rohrleitungen 5 der Hin- und der Rückleitungen verlaufen dabei zumindest im Wesentlichen parallel zueinander und sind zur Horizontalen leicht geneigt, wie aus Figur 6c ersichtlich. Der Neigungswinkel der Rohrleitungen 5 zur Horizontalen liegt auch hier bevorzugt zwischen 0,5° und 5°, besonders bevorzugt zwischen 2° und 4° und in einem bevorzugten Ausführungsbeispiel beträgt der Winkel zwischen den Rohrleitungen und der horizontalen Ebene 3°.

An dem ersten Verteiler 1 (Eingangsverteiler) ist an einem tiefsten Punkt T dieses Verteilers 1 ein erster Anschlussstutzen 1a angeordnet. An entsprechender Stelle, d.h., an einem tiefsten Punkt T, ist auch an dem zweiten Verteiler 2 (Ausgangsverteiler) ein zweiter Anschlussstutzen 2a angeordnet. An dem zweiten Verteiler 2 (Ausgangsverteiler) ist an einem höchsten Punkt H ein weiterer Anschlussstutzen angeordnet, der als dritter Anschlussstutzen 3 bezeichnet wird. Der am gegenüberliegenden Ende B der Wärmeübertrageranordnung angeordnete Umlenkverteiler 4 weist an einem höchsten Punkt H eine Lüftungsöffnung 10 auf, in die ein Ventil 11 eingesetzt ist, wie aus Figur 5 ersichtlich. Über dieses Ventil 11 kann die Lüftungsöffnung 10 geöffnet oder geschlossen werden, wobei das Ventil 11 zweckmäßig als selbsttätig verschließendes Ventil ausgebildet ist, das sich automatisch verschließt, sobald eine Flüssigkeit in das Ventil eintritt. Unterhalb des Ventils 11 ist dabei ein handbetätigbares Revisionsventil 26 vorgesehen, mit dem das obere Ende des Umlenkverteilers zu Revisions- und Instandhaltungsarbeiten verschlossen werden kann.

Zumindest in dem zweiten Anschlussstutzen 2a, der am unteren Ende des zweiten Verteilers 2 (Ausgangsverteiler) angeordnet ist, ist ein (hier nicht gezeigtes) steuerbares Ventil V zum Öffnen und Schließen des zweiten Anschlussstutzens 2a eingesetzt. Das Ventil V kann alternativ auch an einer anderen Stelle platziert sein, bspw. in einer mit dem zweiten Anschlussstutzen 2a in Verbindung stehenden Fluidleitung.

In Figur 6 sind in einer Übersichts-Darstellung des zweiten Ausführungsbeispiels der Wärmeübertrageranordnung die vordere Stirnseite der der 2-pass-Wärmeübertrageranordnung (Figur 6a), die hintere Stirnseite (Figur 6b) und eine Seitenansicht (Figur 6c) schematisch dargestellt. Aus Figur 6 geht insbesondere die Platzierung der Anschlussstutzen 1a, 2a und 3 am ersten und am zweiten Verteiler 1, 2 sowie die Neigung der Rohrleitungen 5 zum vorderen Ende A hin hervor.

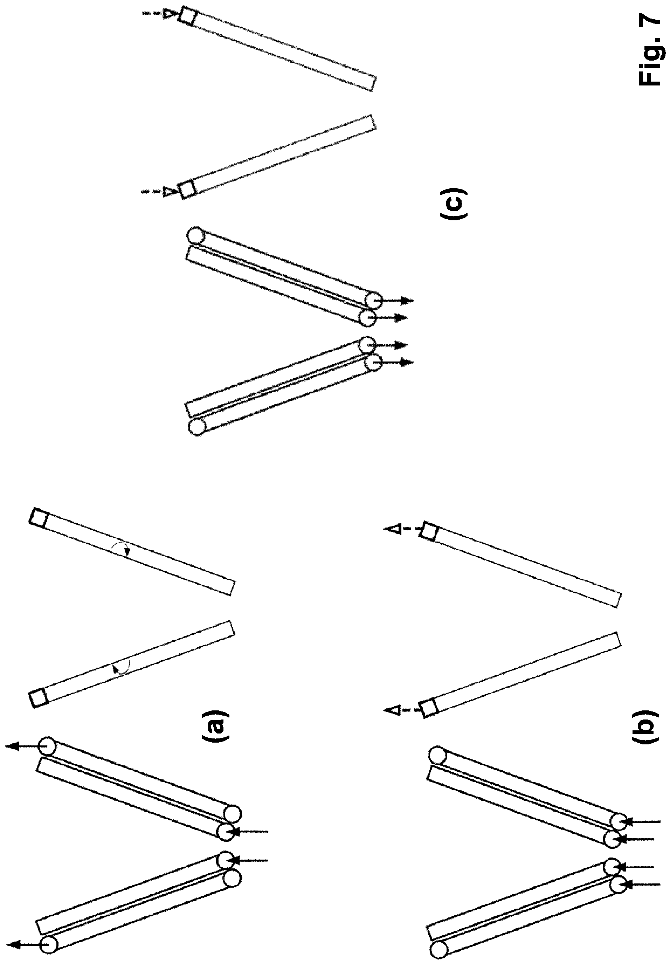

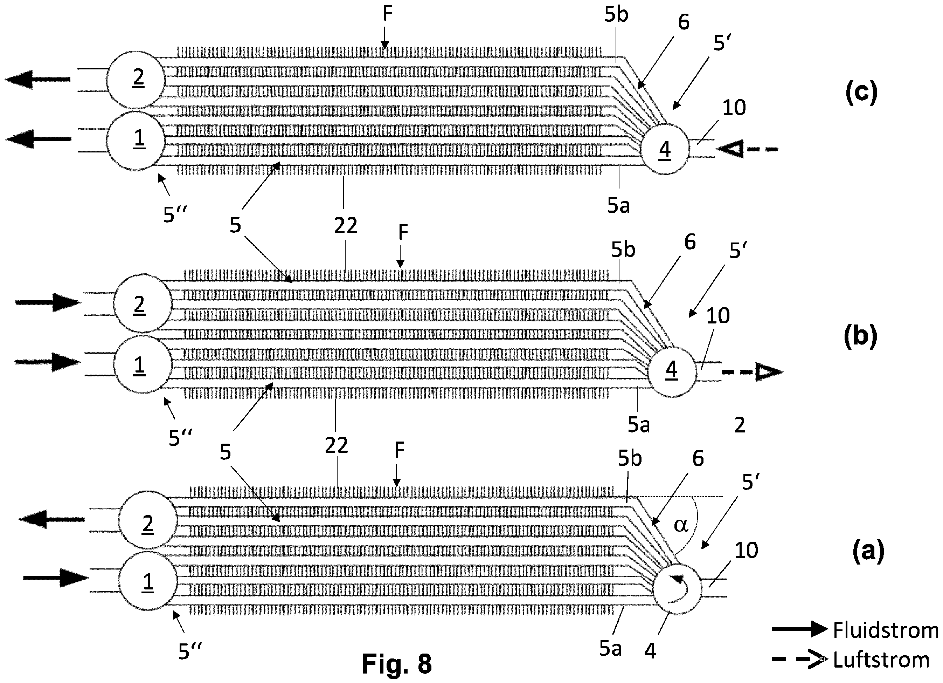

In den Figuren 7 und 8 sind verschiedene Betriebsmodi des zweiten Ausführungsbeispiels der Wärmeübertrageranordnung (gern, den Figuren 4 bis 6) schematisch dargestellt. In dem in Figur 7a und Figur 8a gezeigten Rückkühlbetrieb wird bspw. Wasser als Wärmeträgermedium durch die Rohrleitungen 5 (Hinleitungen 5a und Rückleitungen 5b) der Wärmeübertrageranordnung geleitet. Gleichzeitig wird von wenigstens einem Ventilator 12, der an der Oberseite der Wärmeübertrageranordnung angeordnet ist (wie aus Figur 6c ersichtlich) kalte Luft aus der Umgebung angesaugt und durch die Wärmeübertrager der Wärmeübertrageranordnung geleitet, um einen Wärmeaustausch zwischen dem durch die Rohrleitungen 5 geleiteten Wärmeträgermedium (Wasser) und der angesaugten Luft vorzunehmen. Zur Erhöhung der Wärmeübertragungseffizienz sind an den Rohrleitungen 5 wiederum Lamellen 22 befestigt (Figur 8), um die effektive Wärmeübertragungsfläche zu erhöhen. Anstelle herkömmlicher Lamellen- bzw. Rippenrohr-Wärmeübertrager können auch in diesem Ausführungsbeispiel der Wärmeübertrageranordnung Mikrokanal-Wärmeübertrager eingesetzt werden.

In dem in den Figuren 7a und 8a dargestellten Rückkühlbetrieb wird das als Wärmeträgermedium eingesetzten Fluid über den ersten Anschlussstutzen 1a in den ersten Verteiler 1 (Eingangsverteiler) eingeleitet und von dort durch die Rohrleitungen 5 der ersten Gruppe von Rohrleitungen 5a (Hinleitungen) zum Umlenkverteiler 4 geleitet und darin in die Rohrleitungen der zweiten Gruppe von Rohrleitungen 5a (Rückleitungen) umgelenkt. Das Fluid strömt durch die Rückleitungen zurück in den zweiten Verteiler 2 (Ausgangsverteiler). Das Fluid wird von dem Ausgangsverteiler 2 durch den am oberen Ende des Ausgangsverteilers 2 angeordneten dritten Anschlussstutzen 3 entnommen und über eine an den dritten Anschlussstutzen 3 angeschlossene Fluidleitung als Kühlmedium in ein Kühlmediumreservoir (Behälter B) oder direkt zu einem zu kühlenden Verbraucher geführt.

In dem Rückkühlbetrieb gemäß Figur 7a und 8a ist der zweite Anschlussstutzen 2a durch das darin angeordnete Ventil V verschlossen.

In den Figuren 7b und 8b ist die Wärmeübertrageranordnung jeweils in einem Befüllungsbetrieb gezeigt, in dem die Wärmeübertrager entweder erstmalig befüllt oder nach einer Entleerung mit dem Fluid wieder befüllt werden kann. In dem Befüllungsbetrieb sind die unteren Anschlussstutzen 1a, 2a (erster und zweiter Anschlussstutzen), die jeweils am unteren Ende des ersten und des zweiten Verteilers 2 angeordnet sind, geöffnet. Dadurch kann das Fluid gleichzeitig über die unteren Anschlussstutzen 1a, 2a in den ersten und den zweiten Verteiler 1, 2 eingefüllt werden. Das Fluid strömt anschließend, wie in den Figuren 7b und 8b dargestellt, gleichzeitig durch alle Rohrleitungen 5 (also sowohl durch die Hinleitungen 5a als auch durch die Rückleitungen 5b) in derselben Strömungsrichtung von dem einen Ende A der Wärmeübertrageranordnung zu dem gegenüberliegenden Ende B. Aufgrund der Neigung der Rohrleitungen 5 zu dem vorderen Ende A hin strömt das Fluid in den Rohrleitungen 5 dabei entgegen der Schwerkraft nach oben in Richtung des am hinteren stirnseitigen Ende B angeordneten Umlenkverteilers 4. Dabei wird die sich in dem Umlenkverteiler 4 befindliche Luft durch die Lüftungsöffnungen 10 am oberen Ende des Umlenkverteilers herausgedrückt, wodurch der Umlenkverteiler 4 entlüftet wird. Um zu verhindern, dass bei vollständiger Befüllung der Wärmeübertrager mit dem eingefüllten Fluid das Fluid aus der Lüftungsöffnung am Umlenkverteiler 4 austreten kann, ist in der Lüftungsöffnung 10 zweckmäßig ein sich selbsttätig verschließendes Ventil 11 angeordnet.

Entsprechend der Befüllung der Wärmeübertrageranordnung mit dem Fluid kann umgekehrt durch Öffnen des Ventils V in bzw. am zweiten Anschlussstutzen 2a auch eine schnelle Entleerung der Wärmeübertrageranordnung erfolgen. In den Figuren 7c und 8c ist jeweils ein Entleerungsbetrieb der Wärmeübertrageranordnung gezeigt, in dem bei geöffnetem Ventil V im zweiten Anschlussstutzen 2a das Fluid gleichzeitig aus allen Rohrleitungen 5 (also sowohl aus den Hinleitungen 5a als auch aus den Rückleitungen 5b) schwerkraftbedingt und in derselben Strömungsrichtung entlang des Gefälles der Rohrleitungen 5 vom hinteren Ende B zum vorderen Ende A hin in den ersten und den zweiten Verteiler 1, 2 fließen kann. Der Fluss des Fluids wird dabei wiederum durch die Neigung der Rohrleitungen 5 zu dem vorderen Ende A hin und durch die Belüftung des Umlenkverteilers 4 über die Lüftungsöffnung 10 gefördert. Das Fluid kann schließlich durch die unteren Anschlussstutzen 1a, 2a (erster und zweiter Anschlussstutzen) in eine hier nicht dargestellte Fluidleitung abfließen, welche mit diesen Anschlussstutzen 1a, 2a in Verbindung steht.

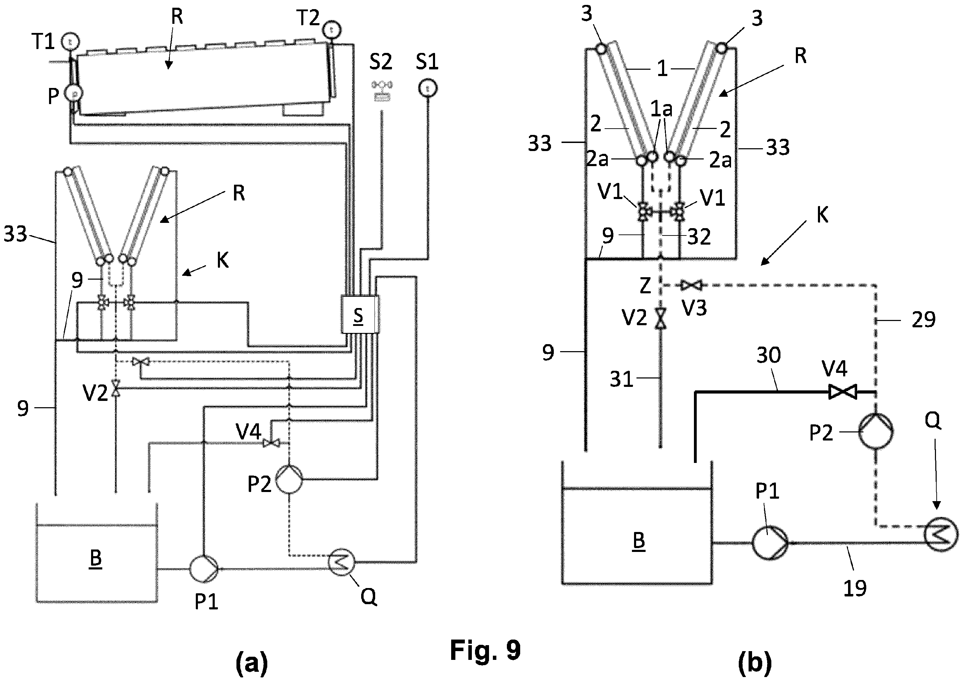

In Figur 9 ist beispielhaft ein Kühlsystem dargestellt, in dem die zuvor beschriebene Wärmeübertrageranordnung gemäß den Figuren 4 bis 6 eingesetzt werden kann. Das in Figur 9 schematisch gezeigte Kühlsystem umfasst einen Kreislauf K, in dem ein Fluid, insbesondere Wasser, als Wärmeträgermedium geführt wird, einen mit dem Kreislauf K in Verbindung stehenden Behälter B, in dem das Fluid bevorratet ist, eine Wärmequelle Q, welche dem Fluid am Ort der Wärmequelle Wärme zuführt, sowie mindestens eine Wärmeübertrageranordnung, die in dem Kühlsystem als Rückkühler R eingesetzt wird, um das Fluid durch Wärmeaustausch mit der Umgebungsluft zu kühlen. In dem in Figur 9 gezeigten Beispiel wird die Wärmeübertrageranordnung mit zwei 2-pass-Wärmeüberträgern gemäß den Figuren 4 bis 6 als Rückkühler R eingesetzt.

Der Rückkühler R des in Figur 9 gezeigten Kühlsystems steht dabei über Fluidleitungen 9 mit dem Behälter B in Verbindung. Der Behälter B ist bevorzugt zur Umgebung des Behälterstandorts offen. Vom Behälter B führt eine Fluidleitung 19 zur Wärmequelle Q, um das im Behälter B bevorratete und gekühlte Fluid als Kühlmedium zur Wärmquelle Q zu führen. Zur Förderung des Fluids vom Behälter B zur Wärmequelle Q ist eine erste Pumpe P1 vorgesehen. Am Ort der Wärmequelle Q wird das Fluid durch Wärmeaustausch erwärmt und durch eine weitere Leitung 29 zurück zum Rückkühler R geleitet. Zweckmäßig ist in der Leitung 29 eine zweite Pumpe P2 angeordnet, welche das Fluid von der Wärmequelle Q zurück zum Rückkühler R fördert. Von der Leitung 29 zweigt eine Abzweigleitung 30 in den Behälter B ab. Zum Öffnen und Verschließen der Abzweigleitung 30 ist ein Ventil V4 vorgesehen. Ein weiteres Ventil V3 ist stromabwärts der Abzweigleitung 30 in der Leitung 29 angeordnet. Die Leitung 29 verzweigt sich an einer Zweigstelle Z in eine Rückführleitung 31 zum Behälter B und in eine zum Rückkühler R führende Zufuhrleitung 32. In der Rückführleitung 31 ist zum Öffnen und Schließen dieser Leitung ein weiteres Ventil V2 angeordnet. Die Zufuhrleitung 32 verzweigt sich in eine zentrale Zufuhrleitung und zwei Nebenleitungen, in denen jeweils ein Dreiwegeventil V1 angeordnet ist. Die zentrale Zufuhrleitung verzweigt sich dabei erneut in zwei Zweige, wobei ein erster Zweig mit dem ersten Anschlussstutzen 1a des linken Wärmeübertragers und ein zweiter Zweig mit dem ersten Anschlussstutzen 1a des rechten Wärmeübertragers in Verbindung steht. Die Nebenleitungen führen zu dem zweiten Anschlusstutzen 2a des linken und des rechten Wärmeübertragers, wie aus Figur 9b ersichtlich. Die Zufuhrleitung 32 steht somit über die Dreiwegeventile V1 mit den unteren Anschlussstutzen 1a und 2a der Wärmeübertrageranordnung in Verbindung. An den (oberen) dritten Anschlussstutzen 3 der Wärmeübertrageranordnung ist eine Abfuhrleitung 33 angeschlossen, welche zur Leitung 9 führt und mit dieser in Verbindung steht.

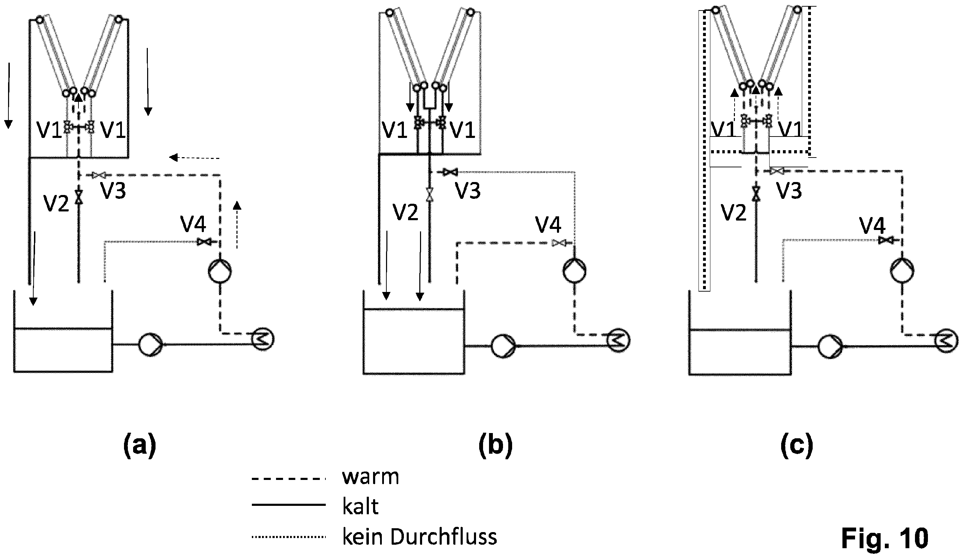

Aus Figur 10 gehen verschiedene Betriebsmodi der Wärmeübertrageranordnung in dem Kühlsystem von Figur 9 hervor. Dabei ist das Fluid im warmen Zustand gestrichelt und im kalten Zustand mit einer durchgezogenen Linie gekennzeichnet. Bei einer gepunkteten Linie erfolgt kein Fluidfluss.

In Figur 10a ist das Kühlsystem von Figur 9 im Rückkühlbetrieb gezeigt. Dabei sind die Ventile V2 und V4 geschlossen, so dass die Leitungen 30 und 31 verschlossen sind. Das Ventil V3 ist geöffnet, so dass das von der Wärmequelle Q erwärmte Fluid durch die Leitungen 29 und 32 zum Rückkühler R strömen kann. Die Dreiwegeventile V1 sind dabei geschlossen, so dass das Fluid von der Leitung 32 jeweils zum ersten Anschlussstutzen 1a des ersten Verteilers 1 (Eingangsverteiler) der beiden Mehrpass-Wärmeübertrager strömen und dadurch in die Wärmeübertrageranordnung eintreten kann. Nach mehrfachem Durchlauf des Fluids durch die Mehrpass-Wärmeübertrager des Rückkühlers R verlässt das gekühlte Fluid den Rückkühler R am dritten Anschlussstutzen 3 und strömt durch die an dem dritten Anschlusstutzen 3 angeschlossene Leitung 33 zur Leitung 9 und von dort in den Behälter B, in dem das gekühlte Fluid bevorratet wird.

In dem in Figur 10b gezeigten Entleerungsbetrieb sind die Ventile V2 und V4 geöffnet und Ventil V3 ist geschlossen. Die Dreiwegeventile V1 sind so geschalten, dass das Fluid von den unteren Anschlussstutzen 1a, 2a (erster und zweiter Anschlussstutzen) in die an diesen Anschlussstutzen angeschlossene Fluidleitung 9 und von dort direkt in den Behälter B fließen kann. Während des Entleerens des Rückkühlers R wird das von der Wärmequelle Q erwärmte Fluid über die Abzweigleitung 30 bei geöffnetem Ventil V4 in den Behälter B zurückgeleitet, ohne dass das Fluid durch den Rückkühler R geführt wird.

In dem in Figur 10c gezeigten Befüllungsbetrieb sind die Ventile V2 und V4 geschlossen und das Ventil V3 ist offen. Die Dreiwegeventile V1 sind dabei so angesteuert, dass das von der Wärmequelle Q erwärmte Fluid über die Leitungen 29 und 32 zu den unteren Anschlussstutzen 1a, 2a (erster und zweiter Anschlussstutzen) der Mehrpass-Wärmeübertrager geleitet wird und von dort in den Rückkühler R eintritt. Nach vollständiger Befüllung der Wärmeübertrager des Rückkühlers R wird der Rückkühler in den Rückkühlbetrieb (Figur 10a) umgeschaltet.

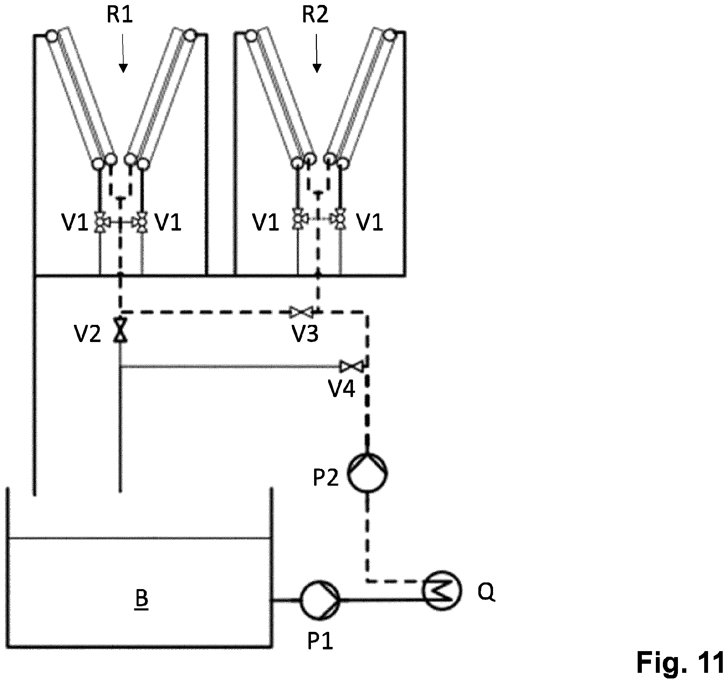

In Figur 11 ist ein Ausführungsbeispiel eines Kühlsystems gezeigt, in dem zwei Wärmeübertrageranordnungen als Rückkühler R1, R2 im Parallel- oder Serienbetrieb eingesetzt werden können. Die beiden Rückkühler R1, R2 können dabei bspw. in Reihe geschaltet gleichzeitig zum Kühlen des als Wärmeträgermedium in dem Kühlsystem verwendeten Fluids verwendet werden. Bei gleichzeitigem Einsatz beider Rückkühler R1, R2 wird eine maximale Kühlleistung des Kühlsystems erzielt. Wenn eine geringere Kühlleistung für eine ausreichende Kühlung des Fluids benötigt wird, kann einer der beiden Rückkühler R1 oder R2 durch die Steuereinrichtung S des Kühlsystems abgestellt werden.

Im Serienbetrieb, in dem beide Rückkühler R1, R2 gleichzeitig zur Kühlung des Fluids betrieben werden, sind die Ventile V2 und V4 geschlossen und das Ventil V3 ist offen, so dass das von der Wärmequelle Q erwärmte Fluid in die beiden Rückkühler R1, R2 jeweils durch den ersten Anschlussstutzen 1a eingeleitet werden kann. Das in den Rückkühlern R1, R2 gekühlte Fluid verlässt die Rückkühler R1, R2 jeweils an dem dritten Anschlussstutzen 3 und strömt durch die mit dem dritten Anschlussstutzen 2a verbundene Fluidleitung 9 in den Behälter B (wie in Figur 11 gezeigt).

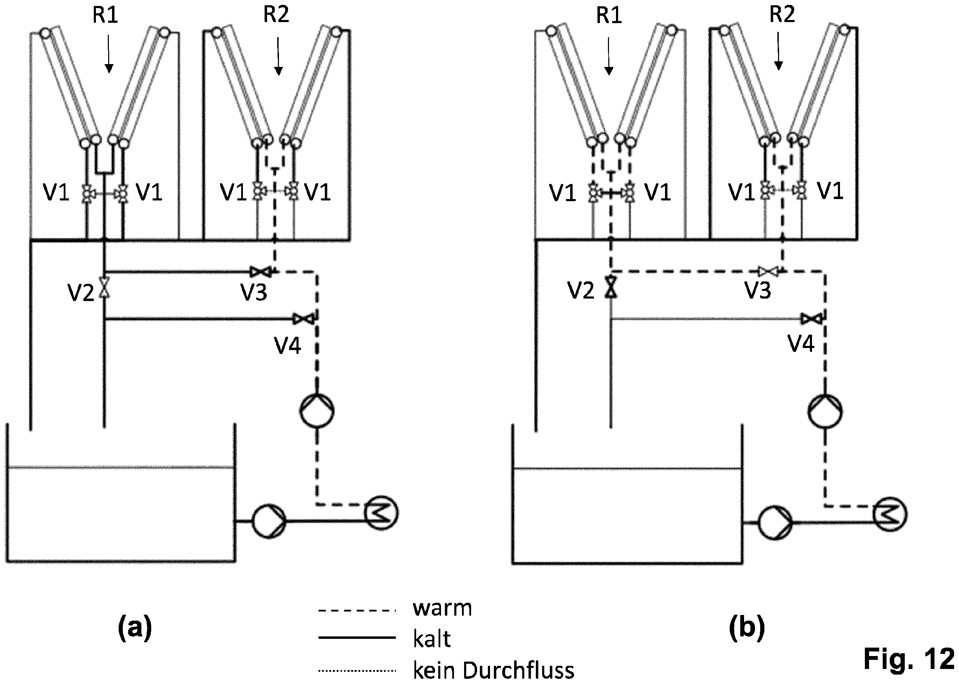

In dem in Figur 12a gezeigten Betriebsmodus des Kühlsystems von Figur 11 sind die Ventile V3 und V4 geschlossen und Ventil V2 ist offen. Dadurch wird nur der zweite Rückkühler R2 im Rückkühlbetrieb betrieben. Der erste Rückkühler R1 befindet sich in einem Stand-by-Betrieb, in dem kein Fluid durch die Rohrleitungen des ersten Rückkühlers R1 geleitet wird.

In dem in Figur 12b gezeigten Betriebsmodus wird der zweite Rückkühler R2 bei geöffnetem Ventil V3 und geschlossenen Ventilen V2 und V4 im Rückkühlbetrieb betrieben, in dem das von der Wärmequelle Q erwärmte Fluid über den ersten Anschlussstutzen 1a in die Wärmeübertrager des zweiten Rückkühlers R2 eingeführt und dort gekühlt und schließlich durch den zweiten Anschlussstutzen 2a aus dem zweiten Rückkühler R2 über die an den dritten Anschlussstutzen 3 angeschlossene Fluidleitung 9 herausgeführt und in den Behälter B geleitet wird. Gleichzeitig dazu wird der erste Rückkühler R1 im Befüllungsbetrieb betrieben, in dem das Fluid über den ersten Anschlussstutzen 1a und den zweiten Anschlussstutzen 2a der Wärmeübertrager gleichzeitig in alle Rohrleitungen 5 des ersten Rückkühlers R1 eingeführt wird, um den Rückkühler R1 vollständig mit Fluid zu füllen.

Zur erfindungsgemäßen Steuerung der Wärmeübertrageranordnung in den verschiedenen Betriebsmodi wird zweckmäßig eine Mehrzahl von Sensoren S1, S2 verwendet, mit denen Umgebungsparametern, wie die Außentemperatur (T_{U}) und/oder die Windgeschwindigkeit (v) erfasst und zur Verarbeitung an eine Steuereinrichtung S geleitet werden können. Neben den Umgebungsparametern werden zweckmäßig über weitere Sensoren T1, T2, P die Eingangstemperatur (Tₑᵢₙ) des Fluids beim Eintritt in die Wärmeübertrageranordnung, die Temperatur des Fluids in den Umlenkverteilern 4, 6 sowie der (hydrostatische) Druck (p) und/oder δie Durchflussmenge des Fluids beim Eintritt in den Eingangsverteiler 1 erfasst.

Die in dem Schema des Kühlsystems von Figur 9a mit Bezugszeichen S bezeichnete Steuereinrichtung ist an die Ventile V, V1, V2, V3 und V4 gekoppelt um diese zu steuern. Die von den Sensoren S1, S2; T1, T2, P erfassten Messwerte werden an die Steuereinrichtung geleitet und die Steuereinrichtung berechnet auf Basis der erfassten Messwerte eine Austrittstemperatur (Tₐᵤₛ) des Fluids beim Austritt aus der Wärmeübertrageranordnung. Bei der Berechnung des Werts der Austrittstemperatur (Tₐᵤₛ) werden auch die Parameter der Wärmeübertrageranordnung, insbesondere deren thermische Leistung, die Dimensionierung der Wärmeübertrager, die Anzahl der Durchläufe des Fluids durch die Rohrleitungen, das als Wärmeträgermedium verwendete Fluid und der Volumenstrom des Fluids durch die Rohrleitungen, berücksichtigt, um eine (maximale) Abkühlung des Fluids beim Entleeren der Wärmeübertrageranordnung zu ermitteln.

Die Steuereinrichtung steuert die Ventile der Wärmeübertrageranordnung so an, dass die Wärmeübertrageranordnung im Rückkühlbetrieb betrieben wird, solange die berechnete Austrittstemperatur (Tₐᵤₛ) größer oder gleich einem vorgegebenen Grenzwert (Tₘᵢₙ) ist. Sobald die berechnete Austrittstemperatur (Tₐᵤₛ) den Grenzwert unterschreitet (also bei Tₐᵤₛ < Tₘᵢₙ), wird die Wärmeübertrageranordnung in den Entleerungsbetrieb umgeschaltet. Das Umschalten erfolgt dabei bspw. durch elektrisches oder pneumatisches Ansteuern der Ventile V, V1, V2, V3 und V4.

Der vorgegebene Grenzwert (Tₘᵢₙ) liegt dabei zweckmäßig um einen Wert Δ oberhalb des Gefrierpunkts des als Wärmeträgermedium verwendeten Fluids (bei Wasser also oberhalb von 0°C), wobei der Wert Δ einen Sicherheitsabstand vom Gefrierpunkt darstellt. So ist selbst bei einer schnellen Entleerung gewährleistet, dass das Fluid bei Frostgefahr nicht einfriert. Bevorzugt liegt der Wert Δ (und damit bei Verwendung von Wasser als Wärmeträgermedium der Grenzwert Tₘᵢₙ = 0°C + Δ ) zwischen 2°C und 7°C.

Nach vollständiger Entleerung wird die Wärmeübertrageranordnung in einem stand-by-Betrieb belassen, in dem die Wärmeübertrager nicht mit Fluid gefüllt sind. In dem stand-by-Betrieb wird überwacht, ob die Frostgefahr beseitigt ist oder weiterhin vorliegt, indem anhand der erfassten Umgebungsparameter die progonistizierte Austrittstemperatur (Tₐᵤₛ) berechnet und mit dem Grenzwert verglichen wird. Sobald die berechnete Austrittstemperatur (Tₐᵤₛ) größer oder gleich dem vorgegebenen Grenzwert (Tₘᵢₙ) ist, schaltet die Steuereinrichtung die Wärmeübertrageranordnung aus dem stand-by in den Befüllungsbetrieb um. Nach vollständiger Befüllung der Wärmeübertrageranordnung wird diese in den Rückkühlbetrieb geschaltet und solange betrieben, bis die berechnete Austrittstemperatur (Tₐᵤₛ) unterhalb des Grenzwerts liegt.

In dem Ausführungsbeispiel der Figur 11 wird die eine Mehrzahl von Wärmeübertragern umfassende Wärmeübertrageranordnung von der Steuereinrichtung so angesteuert, dass die einzelnen Mehrpass- Wärmeübertrager unabhängig voneinander in den verschiedenen Betriebsmodi betrieben werden können. Dabei steuert die Steuereinrichtung die Anzahl der im Rückkühlbetrieb betriebenen Wärmeübertrager in Abhängigkeit der erfassten Umgebungsparameter und/oder der erfassten Eingangstemperatur (Tₑᵢₙ) des Fluids, um eine erforderliche Kühlleistung bereit stellen zu können. Das pro Zeiteinheit durch die Wärmeübertrageranordnung geleitete Fluidvolumen bleibt zweckmäßig unabhängig von der Anzahl der im Rückkühlbetrieb betriebenen Wärmeübertrager gleich. Dabei überwacht die Steuereinrichtung, ob die Temperatur des in der Wärmeübertrageranordnung gekühlten und in dem Behälter bevorrateten Fluids in einem bevorzugten Temperaturbereich zwischen einer Minimal- und einer Maximaltemperatur liegt. Der bevorzugte Temperaturbereich kann bspw. zwischen 15°C und 22°C liegen.

## Patentansprüche

1. Verfahren zum Betrieb einer Wärmeübertrageranordnung mit wenigstens einem Wärmeübertrager, welcher einen ersten Verteiler (1) mit einem ersten Anschlussstutzen (1a) zum Anschluss an eine Fluidleitung (9), einen zweiten Verteiler (2) mit einem zweiten Anschlussstutzen (2a) zum Anschluss an eine Fluidleitung (9), und wenigstens einen ersten Umlenkverteiler (4) sowie eine Mehrzahl von Rohrleitungen (5) umfasst, welche von einem Fluid, insbesondere Wasser, durchströmbar sind,
wobei der erste Verteiler (1) und der zweite Verteiler (2) an einem Ende (A) der Wärmeübertrageranordnung angeordnet sind und der Umlenkverteiler (4) am gegenüberliegenden Ende (B) angeordnet ist und die Rohrleitungen (5) sich von dem einen Ende (A) zum gegenüberliegenden Ende (B) erstrecken, und wobei der erste Anschlussstutzen (1a) an einem tiefsten Punkt (T) oder zumindest in der Nähe des tiefsten Punkts (T) des ersten Verteilers (1) und der zweite Anschlussstutzen (2a) an einem tiefsten Punkt (T) oder zumindest in der Nähe des tiefsten Punkts (T) des zweiten Verteilers (2) angeordnet ist und die Wärmeübertrageranordnung in Abhängigkeit von Umgebungsparametern, insbesondere der Außentemperatur, wechselweise in verschiedenen Betriebsmodi, umfassend eine Rückkühlbetrieb, einen Entleerungsbetrieb, einen Befüllungsbetrieb und einen stand-by-Betrieb, betrieben wird, wobei in dem Entleerungsbetrieb das Fluid schwerkraftbedingt aus allen Rohrleitungen (5) in den ersten Verteiler (1) und den zweiten Verteiler (2) und von dort jeweils über den ersten und den zweiten Anschlussstutzen (1a, 2a) in eine Fluidleitung (9) abfließt, **dadurch gekennzeichnet, dass** in dem Befüllungsbetrieb das Fluid entgegen der Schwerkraft aus dem ersten Verteiler (1) und dem zweiten Verteiler (2) in alle Rohrleitungen (5) einströmt.

2. Verfahren nach Anspruch 1, **dadurch gekennzeichnet, dass** am ersten Verteiler (1) und/oder am zweiten Verteiler (2) ein dritter Anschlussstutzen (3) an einem höchsten Punkt (H) oder zumindest in der Nähe des höchsten Punkts (H) des jeweiligen Verteilers (1 oder 2) angeordnet ist und dass an einem höchsten Punkt (T) oder zumindest in der Nähe des höchsten Punkts (T) des Umlenkverteilers (4) wenigstens eine Lüftungsöffnung (10) zum Druckausgleich mit der Umgebung angeordnet ist.

3. Verfahren nach Anspruch 2, **dadurch gekennzeichnet, dass** das Fluid in dem Rückkühlbetrieb über den ersten Anschlussstutzen (1a) an dem tiefsten Punkt (T) oder zumindest in der Nähe des tiefsten Punkts (T) des ersten Verteilers (1) in die Wärmeübertrageranordnung eingeleitet und über den dritten Anschlussstutzen (3) an dem höchsten Punkt (H) oder zumindest in der Nähe des höchsten Punkts (H) des zweiten Verteilers (2) abgeleitet wird.

4. Verfahren nach einem der Ansprüche 1 bis 3, **dadurch gekennzeichnet, dass** die Wärmeübertrageranordnung nach dem Entleerungsbetrieb im stand-by betrieben wird, in dem die Rohrleitungen (5) zumindest im Wesentlichen leer sind.

5. Verfahren nach einem der Ansprüche 1 bis 4, **dadurch gekennzeichnet, dass** die Umschaltung der Betriebsmodi der Wärmeübertrageranordnung durch Ansteuerung, insbesondere Öffnen und Schließen, von Ventilen der Wärmeübertrageranordnung erfolgt.

6. Verfahren nach Anspruch 5, **dadurch gekennzeichnet, dass** die Umschaltung der Betriebsmodi durch elektrisches Ansteuern der Ventile erfolgt.

7. Verfahren nach einem der Ansprüche 1 bis 6, **dadurch gekennzeichnet, dass** Umgebungsparameter, insbesondere die Außentemperatur (Tu) und/oder die Windgeschwindigkeit (v), sowie die Eingangstemperatur (Tₑᵢₙ) des Fluids beim Eintritt in die Wärmeübertrageranordnung mittels Sensoren erfasst und als Messwerte an eine Steuereinrichtung geleitet werden und dass die Steuereinrichtung auf Basis der erfassten Messwerte eine Austrittstemperatur (Tₐᵤₛ) des Fluids beim Austritt aus der Wärmeübertrageranordnung berechnet.

8. Verfahren nach Anspruch 7, **dadurch gekennzeichnet, dass** die Steuereinrichtung die Wärmeübertrageranordnung im Rückkühlbetrieb betreibt, solange die berechnete Austrittstemperatur (Tₐᵤₛ) größer oder gleich einem vorgegebenen Grenzwert (Tₘᵢₙ) ist und die Wärmeübertrageranordnung in den Entleerungsbetrieb umschaltet, wenn die berechnete Austrittstemperatur (Tₐᵤₛ) unter dem Grenzwert (Tₘᵢₙ) liegt.

9. Verfahren nach einem der Ansprüche 7 oder 8, **dadurch gekennzeichnet, dass** die Steuereinrichtung die Wärmeübertrageranordnung aus dem stand-by in den Befüllungsbetrieb umschaltet, sobald die berechnete Austrittstemperatur (Tₐᵤₛ) größer oder gleich einem vorgegebenen Grenzwert (Tₘᵢₙ) ist.

10. Verfahren nach einem der Ansprüche 7 bis 9, **dadurch gekennzeichnet, dass** der vorgegebene Grenzwert (Tₘᵢₙ) größer als 0°C ist und bevorzugt im Bereich von 1°C bis 7°C liegt.

11. Verfahren nach einem der Ansprüche 7 bis 10, **dadurch gekennzeichnet, dass** der vorgegebene Grenzwert (Tₘᵢₙ) in Abhängigkeit der thermischen Leistung der Wärmeübertrageranordnung und insbesondere in Abhängigkeit der Dimensionierung, der Anzahl der Durchläufe des Fluids durch die Rohrleitungen (5), dem verwendeten Fluid und dem Volumenstrom des Fluids durch die Rohrleitungen bestimmt wird.

12. Verfahren nach einem der Verfahren nach einem der Ansprüche 7 bis 11, **dadurch gekennzeichnet, dass** die Wärmeübertrageranordnung eine Mehrzahl von Wärmeübertragern umfasst, welche jeweils von der Steuereinrichtung angesteuert werden und unabhängig voneinander in den verschiedenen Betriebsmodi betrieben werden können, wobei die Steuereinrichtung in Abhängigkeit der erfassten Umgebungsparameter und/oder der erfassten Eingangstemperatur (Tₑᵢₙ) des Fluids die Anzahl der im Rückkühlbetrieb betriebenen Wärmeübertrager steuert.

13. Verfahren nach Anspruch 12, **dadurch gekennzeichnet, dass** das pro Zeiteinheit durch die Wärmeübertrageranordnung geleitete Fluidvolumen unabhängig von der Anzahl der im Rückkühlbetrieb betriebenen Wärmeübertrager gleich bleibt.

14. Verfahren nach einem der voranstehenden Ansprüche, **dadurch gekennzeichnet, dass** mittels eines Drucksensors (p) der hydrostatische Druck des Fluids in der Wärmeübertrageranordnung erfasst wird und das Umschalten vom Befüllungsbetrieb auf den Rückkühlbetrieb erfolgt, sobald der vom Drucksensors (p) erfasste hydrostatische Druck einen vorgegebenen Druckgrenzwert übersteigt.

15. Verfahren nach einem der voranstehenden Ansprüche, **dadurch gekennzeichnet, dass** die Steuereinrichtung (S) eine voraussichtliche Befüllzeit berechnet und den Befüllungsbetrieb beendet, sobald die berechnete Befüllzeit unter Befüllung der Wärmeübertrageranordnung mit dem Fluid abgelaufen ist.

## Claims

1. Method for operating a heat exchanger arrangement with at least one heat exchanger, which comprises a first distributor (1) with a first connection piece (1a) for connection to a fluid line (9), a second distributor (2) with a second connection piece (2a) for connection to a fluid line (9), and at least one first deflection distributor (4) and a plurality of pipes (5), through which a fluid, in particular water, can flow,
the first distributor (1) and the second distributor (2) being arranged at one end (A) of the heat exchanger arrangement and the deflection distributor (4) being arranged at the opposite end (B),
and the pipes (5) extending from the one end (A) to the opposite end (B), and wherein the first connection piece (1a) is arranged at a lowest point (T) or at least in the vicinity of the lowest point (T) of the first distributor (1) and the second connection piece (2a) is arranged at a lowest point (T) or at least in the vicinity of the lowest point (T) of the second distributor (2)
and the heat exchanger arrangement is operated in dependence on ambient parameters, in particular the outside temperature, alternately in different operating modes, comprising a recooling mode, a draining mode, a filling mode and a stand-by mode, wherein in the draining mode the fluid flows out of all the pipes (5) into the first distributor (1) and the second distributor (2) and from there via the first and the second connection piece (1a, 2a) respectively into a fluid line (9) due to gravity, **characterised in that** in the filling mode the fluid flows against gravity out of the first distributor (1) and the second distributor (2) into all the pipes (5).

2. Method according to claim 1, **characterised in that** a third connection piece (3) is arranged on the first distributor (1) and/or on the second distributor (2) at a highest point (H) or at least in the vicinity of the highest point (H) of the respective distributor (1 or 2) and **in that** at least one ventilation opening (10) is arranged at a highest point (T) or at least in the vicinity of the highest point (T) of the deflection distributor (4) for pressure equalisation with the environment.

3. Method according to claim 2, **characterized in that** the fluid in the recooling mode is introduced into the heat exchanger arrangement via the first connection piece (1a) at the lowest point (T) or at least in the vicinity of the lowest point (T) of the first distributor (1) and is discharged via the third connection piece (3) at the highest point (H) or at least in the vicinity of the highest point (H) of the second distributor (2).

4. Method according to any one of the preceding claims 1 to 3, **characterized in that** the heat exchanger arrangement is operated in stand-by after the draining operation, in which the pipes (5) are at least substantially empty.

5. Method according to any one of the preceding claims 1 to 4, **characterised in that** the switching of the operating modes of the heat exchanger arrangement is effected by actuating, in particular opening and closing, valves of the heat exchanger arrangement.

6. Method according to claim 5, **characterised in that** the switching of the operating modes is effected by electrically controlling the valves.

7. Method according to any one of the preceding claims 1 to 6, **characterised in that** ambient parameters, in particular the outside temperature (Tu) and/or the wind speed (v), as well as the inlet temperature (Tₑᵢₙ) of the fluid on entry into the heat exchanger arrangement are detected by sensors and passed as measured values to a control device, and **in that** the control device calculates an outlet temperature (Tₐᵤₛ) of the fluid on exit from the heat exchanger arrangement on the basis of the detected measured values.

8. Method according to claim 7, **characterized in that** the control device operates the heat exchanger arrangement in the recooling mode as long as the calculated outlet temperature (Tₐᵤₛ) is greater than or equal to a predetermined threshold value (Tₘᵢₙ) and switches the heat exchanger arrangement to the draining mode when the calculated outlet temperature (Tₐᵤₛ) is below the threshold value (Tₘᵢₙ).

9. Method according to any one of the preceding claims 7 or 8, **characterised in that** the control device switches the heat exchanger arrangement from stand-by to the filling mode as soon as the calculated outlet temperature (Tₐᵤₛ) is greater than or equal to a predetermined threshold value (Tₘᵢₙ).

10. Method according to any one of the preceding claims 7 to 9, **characterised in that** the predetermined threshold value (Tₘᵢₙ) is greater than 0°C and is preferably in the range from 1°C to 7°C.

11. Method according to any one of the preceding claims 7 to 10, **characterized in that** the predetermined threshold value (Tₘᵢₙ) is determined in dependence of the thermal power of the heat exchanger arrangement and in particular as a function of the dimensioning, the number of passesMM of the fluid through the pipes (5), the fluid used and the volume flow of the fluid through the pipes.

12. Method according to one of the methods according to any one of the preceding claims 7 to 11, **characterised in that** the heat exchanger arrangement comprises a plurality of heat exchangers which are each controlled by the control device and can be operated independently of one another in the various operating modes, the control device controlling the number of heat exchangers operated in recooling mode as a function of the sensed ambient parameters and/or the sensed inlet temperature (Tₑᵢₙ) of the fluid.

13. Method according to claim 12, **characterized in that** the fluid volume passed through the heat exchanger arrangement per unit of time remains the same irrespective of the number of heat exchangers operated in recooling mode.

14. Method according to any one of the preceding claims, **characterised in that** the hydrostatic pressure of the fluid in the heat exchanger arrangement is detected by means of a pressure sensor (p) and switching from the filling mode to the recooling mode takes place as soon as the hydrostatic pressure detected by the pressure sensor (p) exceeds a predetermined pressure limit value.

15. Method according to any one of the preceding claims, **characterised in that** the control device (S) calculates an anticipated filling time and terminates the filling mode as soon as the calculated filling time has elapsed while filling of the heat exchanger arrangement with the fluid.

## Revendications

1. Procédé de fonctionnement d'un agencement d'échangeur de chaleur avec au moins un échangeur de chaleur qui comporte un premier distributeur (1) avec une première tubulure de raccordement (1a) pour le raccordement à une conduite de fluide (9), un second distributeur (2) avec une deuxième tubulure de raccordement (2a) pour le raccordement à une conduite de fluide (9), et au moins un premier distributeur de renvoi (4) ainsi qu'une pluralité de conduites tubulaires (5) qui sont traversables par un fluide, en particulier de l'eau, dans lequel le premier distributeur (1) et le second distributeur (2) sont agencés à une extrémité (A) de l'agencement d'échangeur de chaleur et le distributeur de renvoi (4) est agencé à l'extrémité opposée (B) et les conduites tubulaires (5) s'étendent de l'une extrémité (A) à l'extrémité opposée (B), et dans lequel la première tubulure de raccordement (1a) est agencée à un point le plus bas (T) ou au moins à proximité du point le plus bas (T) du premier distributeur (1) et la deuxième tubulure de raccordement (2a) à un point le plus bas (T) ou au moins à proximité du point le bas (T) du second distributeur (2) et l'agencement d'échangeur de chaleur est en fonctionnement en fonction de paramètres environnementaux, en particulier de la température extérieure, alternativement dans différents modes de fonctionnement, comprenant un mode de condensation, un mode de vidage, un mode de remplissage et un mode d'attente, dans lequel dans le mode de vidage, le fluide s'écoule en raison de la force de gravité de toutes les conduites tubulaires (5) dans le premier distributeur (1) et le second distributeur (2) et de là respectivement par le biais des première et seconde tubulures de raccordement (1a, 2a) dans une conduite de fluide (9), **caractérisé en ce que** dans le mode de remplissage, le fluide afflue à l'encontre de la force de gravité du premier distributeur (1) et du second distributeur (2) dans toutes les conduites tubulaires (5).

2. Procédé selon la revendication 1, **caractérisé en ce qu'**une troisième tubulure de raccordement (3) est agencée au niveau du premier distributeur (1) et/ou au niveau du second distributeur (2) à un point le plus haut (H) ou au moins à proximité du point le plus haut (H) du distributeur (1 ou 2) respectif et qu'à un point le plus haut (T) ou au moins à proximité du point le plus haut (T) du distributeur de renvoi (4), au moins une ouverture de ventilation (10) est agencée pour la compensation de pression avec l'environnement.

3. Procédé selon la revendication 2, **caractérisé en ce que** le fluide est introduit dans le mode de condensation par le biais de la première tubulure de raccordement (1a) au point le plus bas (T) ou au moins à proximité du point le plus bas (T) du premier distributeur (1) dans l'agencement d'échangeur de chaleur et est détourné par le biais de la troisième tubulure de raccordement (3) au point le plus haut (H) ou au moins à proximité du point le plus haut (H) du second distributeur (2).

4. Procédé selon l'une quelconque des revendications 1 à 3, **caractérisé en ce que** l'agencement d'échangeur de chaleur fonctionne en attente après le mode de vidage, dans lequel les conduites tubulaires (5) sont au moins sensiblement vides.

5. Procédé selon l'une quelconque des revendications 1 à 4, **caractérisé en ce que** la commutation des modes de fonctionnement de l'agencement d'échangeur de chaleur est effectuée par commande, en particulier ouverture et fermeture, de soupapes de l'agencement d'échangeur de chaleur.

6. Procédé selon la revendication 5, **caractérisé en ce que** la commutation des modes de fonctionnement est effectuée par commande électrique des soupapes.

7. Procédé selon l'une quelconque des revendications 1 à 6, **caractérisé en ce que** des paramètres environnementaux, en particulier la température extérieure (T_{U}) et/ou la vitesse du vent (v), ainsi que la température d'entrée (T_{entrée}) du fluide sont détectés lors de l'entrée dans l'agencement d'échangeur de chaleur au moyen de capteurs et sont acheminés comme valeurs de mesure à un dispositif de commande et que le dispositif de commande calcule sur la base des valeurs de mesure détectées une température de sortie (Tₛₒᵣₜᵢₑ) du fluide lors de la sortie de l'agencement d'échangeur de chaleur.

8. Procédé selon la revendication 7, **caractérisé en ce que** le dispositif de commande fait fonctionner l'agencement d'échangeur de chaleur dans le mode de condensation tant que la température de sortie (Tₛₒᵣₜᵢₑ) calculée est supérieure ou égale à une valeur limite prédéfinie (Tₘᵢₙ) et l'agencement d'échangeur de chaleur commute dans le mode de vidage lorsque la température de sortie (Tₛₒᵣₜᵢₑ) calculée se trouve sous la valeur limite (Tₘᵢₙ).

9. Procédé selon l'une quelconque des revendications 7 ou 8, **caractérisé en ce que** le dispositif de commande commute l'agencement d'échangeur de chaleur de l'attente dans le mode de remplissage dès que la température de sortie (Tₛₒᵣₜᵢₑ) calculée est supérieure ou égale à une valeur limite prédéfinie (Tₘᵢₙ) .

10. Procédé selon l'une quelconque des revendications 7 à 9, **caractérisé en ce que** la valeur limite prédéfinie (Tₘᵢₙ) est supérieure à 0 °C et de préférence se trouve dans la plage de 1 °C à 7 °C.

11. Procédé selon l'une quelconque des revendications 7 à 10, **caractérisé en ce que** la valeur limite prédéfinie (Tₘᵢₙ) est déterminée en fonction de la puissance thermique de l'agencement d'échangeur de chaleur et en particulier en fonction du dimensionnement, du nombre de passages du fluide par les conduites tubulaires (5), du fluide utilisé et du courant volumique du fluide par les conduites tubulaires.

12. Procédé selon l'un quelconque des procédés selon l'une quelconque des revendications 7 à 11, **caractérisé en ce que** l'agencement d'échangeur de chaleur comporte une pluralité d'échangeurs de chaleur qui sont commandés respectivement par le dispositif de commande et peuvent être en fonctionnement indépendamment les uns des autres dans les différents modes de fonctionnement, dans lequel le dispositif de commande commande en fonction des paramètres environnementaux détectés et/ou de la température d'entrée (T_{entrée}) détectée du fluide le nombre d'échangeurs de chaleur en fonctionnement dans le mode de condensation.

13. Procédé selon la revendication 12, **caractérisé en ce que** le volume de fluide acheminé par unité de temps par l'agencement d'échangeur de chaleur reste identique indépendamment du nombre d'échangeurs de chaleur en fonctionnement dans le mode de condensation.

14. Procédé selon l'une quelconque des revendications précédentes, **caractérisé en ce qu'**au moyen d'un capteur de pression (p), la pression hydrostatique du fluide est détectée dans l'agencement d'échangeur de chaleur et la commutation du mode de remplissage au mode de condensation est effectuée dès que la pression hydrostatique détectée par le capteur de pression (p) dépasse une valeur limite de pression prédéfinie.

15. Procédé selon l'une quelconque des revendications précédentes, **caractérisé en ce que** le dispositif de commande (S) calcule un temps de remplissage probable et met fin au mode de remplissage dès que le temps de remplissage calculé est écoulé par le remplissage de l'agencement d'échangeur de chaleur avec le fluide.
